# EUROPEAN PATENT SPECIFICATION

(11) **EP 4 261 047 B1**
(45) Date of publication and mention of the grant of the patent: **24.06.2026**
(21) Application number: 21903251.3
(22) Date of filing: 30.11.2021
(51) Int. Cl.: B60C 1/00, C08C 19/22, C08C 19/25, C08K 5/31, C08K 5/548, C08L 7/00, C08L 15/00, C08K 3/36

(54) **RUBBER COMPOSITION, METHOD FOR MANUFACTURING RUBBER COMPOSITION, AND TIRE**
KAUTSCHUKZUSAMMENSETZUNG, VERFAHREN ZUR HERSTELLUNG EINER KAUTSCHUKZUSAMMENSETZUNG UND REIFEN
COMPOSITION DE CAOUTCHOUC, PROCEDE DE FABRICATION DE COMPOSITION DE CAOUTCHOUC ET PNEU

(30) Priority: 09.12.2020 JP 2020204597
(43) Date of publication of application: 18.10.2023
(73) Proprietor: BRIDGESTONE CORPORATION, Chuo-ku Tokyo 104-8340 (JP)
(72) Inventor: AOKI, Misa, Tokyo 104-8340 (JP)
(74) Representative: Marks & Clerk LLP
(86) International application number: PCT/JP2021/043989
(87) International publication number: WO 2022/124147

(56) References cited:
- WO-A1-2013/046850
- WO-A1-2017/104423
- JP-A- 2002 146 101
- JP-A- 2019 533 740
- JP-A- 2020 525 592
- KR-A- 20210 068 182
- US-A1- 2013 059 965
- US-A1- 2015 148 447
- US-A1- 2019 309 146

## Description

### TECHNICAL FIELD

The present invention relates to a rubber composition, a method for manufacturing the rubber composition, and a tire.

### BACKGROUND ART

In recent years, there has been a growing demand for reducing fuel consumption of automobiles in connection with the worldwide movement of restricting CO₂ emissions urged by strong interest in the environmental problems. There has been a request for reducing rolling resistance in tire performance to meet the demand accordingly. In view of this, a rubber composition exhibiting a low loss tangent (tanδ) in the temperature range during normal running (such a rubber composition will be referred to as a "rubber composition being excellent in low loss property" hereinafter) has generally been applied to a tire in the prior art as a technique of reducing rolling resistance of a tire.

On the other hand, it is also important to ensure satisfactory braking performance of a vehicle on a wet road surface (which performance will be referred to as "wet performance" hereinafter) in terms of improving safety of the vehicle. That is, there is a demand for improving both fuel consumption performance and wet performance of a tire. To meet the demand, a rubber composition containing styrene-butadiene (SBR) and silica therein is generally used in a conventional tire to somehow improve both wet performance and low rolling resistance.
In this respect, there is also a conventional technique of increasing the glass transition temperature (Tg) of tread rubber of a tire by adding a modified styrene-butadiene rubber having a high styrene content in a rubber composition for use in tread rubber of the tire. However, wet performance and low rolling resistance cannot be satisfactorily improved in a compatible manner in the prior art cases described above.

It should be noted in this regard that reducing a content of a filler such as silica in a rubber composition in order to improve dispersibility of the filler would result in deterioration of the reinforcement property of the rubber composition.

Further, when resin is added to a rubber composition as a technique of improving wet performance of the rubber composition, the loss tangent (tanδ) in the temperature range during normal running rises, thereby deteriorating the low loss property and increasing rolling resistance of a tire having the rubber composition applied thereto.

PTL 1 mentioned below discloses a rubber composition of which rubber component contains styrene-alkylene block copolymer having a styrene content of ≥ 30 mass %.

PTL 1 states that the rubber composition is excellent in dry handling property and capable of improving wet performance and low loss property in a compatible manner.

PTL 2 discloses a rubber composition comprising NR, two different types of modified SBR, a filler and a resin and states that the composition shows low rolling resistance, wet grip and wear resistance.

### CITATION LIST

### Patent Literature

PTL 1: WO 2019/117214 A1
PTL 2: US2015148447 A1

### SUMMARY OF THE INVENTION

### (Technical Problem)

However, the present inventor discovered, as a result of a keen study, that the conventional rubber composition as disclosed in PTL 1 cannot satisfactorily improve both wet performance and low rolling resistance of a tire and there is still room for improvement therein.

The present disclosure therefore aims at solving the prior art problems described above and an object thereof is to provide a rubber composition capable of reducing rolling resistance of a tire, while improving wet performance thereof, and a method for manufacturing the rubber composition.

Further, another object of the present disclosure is to provide a tire being excellent in wet performance and having low rolling resistance.

### (Solution to Problem)

The primary features of the present disclosure for achieving the aforementioned objects are as follows.

A rubber composition of the present disclosure comprises a rubber component, a filler, and a resin,
wherein:
the rubber component contains natural rubber, a high-Tg modified styrene-butadiene rubber, and a low-Tg modified styrene-butadiene rubber having a lower glass transition temperature (Tg) than the high-Tg modified styrene-butadiene rubber;
one end of the high-Tg modified styrene-butadiene rubber has been modified with a modifying agent containing the compound represented by general formula (3) and the other end of the high-Tg modified styrene-butadiene rubber has been modified with an alkoxysilane;
one end of the low-Tg modified styrene-butadiene rubber has been modified with an alkoxysilane; and
a mass ratio of the high-Tg modified styrene-butadiene rubber (high-Tg modified SBR) content with respect to the low-Tg modified styrene-butadiene rubber (low-Tg modified SBR) content, i.e., high-Tg modified SBR content/low-Tg modified SBR content, is larger than 1, 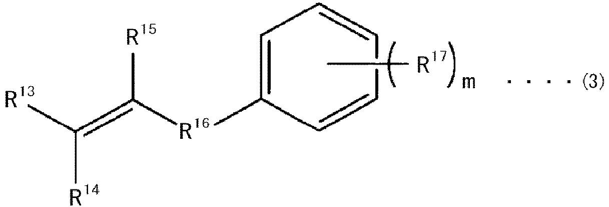
wherein, in general formula (3), each of R¹³ to R¹⁵ independently represents: hydrogen; a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; or a C₃₋₃₀ heterocyclic group;
R¹⁶ represents: single bond; a C₁₋₂₀ alkylene group substituted/unsubstituted with a substituent group; a C₅₋₂₀ cycloalkylene group substituted/unsubstituted with a substituent group; or a C₅₍₆₎₋₂₀ arylene group substituted/unsubstituted with a substituent group. In this respect, the substituent group is a C₁₋₁₀ alkyl group, a C₅₋₁₀ cycloalkyl group, or a C₆₋₂₀ aryl group; and
R¹⁷ represents: a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; a C₃₋₃₀ heterocyclic group; "m" represents an integer in the range of 1 to 5, and a plurality of R¹⁷s may be of either the same type or different types when m is an integer in the range of 2 to 5.

A method for manufacturing a rubber composition of the present disclosure is a method for manufacturing a rubber composition containing the rubber component, the filler, the resin, a guanidine, and a vulcanizing agent, the method comprising:
a first mixing and kneading process of mixing and kneading the rubber component, the filler, the resin, and the guanidine; and
a second mixing and kneading process of mixing and kneading a mixture obtained by the first mixing and kneading process and the vulcanizing agent.

A tire of the present disclosure is characterized in that it has tread rubber formed by the rubber composition described above.

### (Advantageous Effect)

According to the present disclosure, it is possible to provide a rubber composition capable of reducing rolling resistance of a tire, while improving wet performance thereof, and a method for manufacturing the rubber composition.

Further, according to the present disclosure, it is possible to provide a tire being excellent in wet performance and having low rolling resistance.

### DETAILED DESCRIPTION

Hereinafter, a rubber composition, a method for manufacturing the rubber composition, and a tire of the present disclosure will be demonstratively described in detail based on embodiments thereof.

### < Rubber composition >

A rubber composition of the present disclosure contains a rubber component, a filler, and a resin therein. Further, in the rubber composition of the present disclosure, the rubber component contains therein natural rubber, a high-Tg modified styrene-butadiene rubber, and a low-Tg modified styrene-butadiene rubber having a glass transition temperature (Tg) lower than that of the high-Tg modified styrene-butadiene rubber. In this respect, one end of the high-Tg modified styrene-butadiene rubber has been modified with a modifying agent containing the compound represented by general formula (3) and the other end of the high-Tg modified styrene-butadiene rubber has been modified with an alkoxysilane. Further, one end of the low-Tg modified styrene-butadiene rubber has been modified with an alkoxysilane. Yet further, the mass ratio of the high-Tg modified styrene-butadiene rubber (high-Tg modified SBR) content with respect to the low-Tg modified styrene-butadiene rubber (low-Tg modified SBR) content, i.e., high-Tg modified SBR content/low-Tg modified SBR content, is larger than 1.

In the rubber composition of the present disclosure, the high-Tg modified styrene-butadiene rubber in which both ends thereof have been modified and at least one end thereof has been modified with an alkoxysilane interacts with the filler, thereby improving dispersibility of the filler in the rubber composition. It is possible to reduce rolling resistance of a tire, while improving wet performance thereof, by applying the rubber composition to the tire.

Further, the rubber composition of the present disclosure contains the low-Tg modified styrene-butadiene rubber in which one end thereof has been modified with an alkoxysilane, such that the mass ratio of the high-Tg modified styrene-butadiene rubber (high-Tg modified SBR) content with respect to the low-Tg modified styrene-butadiene rubber (low-Tg modified SBR) content, i.e., high-Tg modified SBR content/low-Tg modified SBR content, is larger than 1. As a result, it is possible to significantly improve wet performance of a tire having the rubber composition applied thereto.

It is therefore possible, according to the rubber composition of the present disclosure, to significantly improve wet performance of a tire, while reducing rolling resistance thereof, by applying the rubber composition to the tire.

### (Rubber component)

The rubber component of the rubber component of the present disclosure, containing natural rubber, a high-Tg modified styrene-butadiene rubber, and a low-Tg modified styrene-butadiene rubber having a lower glass transition temperature (Tg) than the high-Tg modified styrene-butadiene rubber, may further contain other rubber components therein. In short, the rubber component contains two or more types of modified styrene-butadiene rubbers of which glass transition temperatures (Tg) differ from each other. In this respect, the mass ratio of the high-Tg modified styrene-butadiene rubber (high-Tg modified SBR) content with respect to the low-Tg modified styrene-butadiene rubber (low-Tg modified SBR) content, i.e., high-Tg modified SBR content/low-Tg modified SBR content, is larger than 1.

The rubber composition, of which rubber component contains a high-Tg modified SBR in which both ends thereof have been modified and a low-Tg modified SBR in which one end thereof has been modified, can improve dispersibility of a filler therein, whereby it is possible to reduce rolling resistance of a tire, without deteriorating wet performance thereof, by applying the rubber composition to the tire. Further, it is possible to further improve wet performance of the tire having the rubber composition applied thereto, without deteriorating rolling resistance thereof, by optimizing the mass ration of the high-Tg modified SBR with respect to the low -Tg modified SBR in the rubber component.

Both ends of the high-Tg modified styrene-butadiene rubber have been modified and at least one end thereof has been modified with an alkoxysilane. Further, one end of the low-Tg modified styrene-butadiene rubber has been modified with an alkoxysilane. In the present disclosure, the term "alkoxysilane" comprehensively represents compounds each having at least one alkoxy group and at least one silicon atom.

The alkoxysilane preferably has at least one nitrogen atom therein. Examples of the group having nitrogen atom therein include: i) a normal, branched, alicyclic or aromatic C₁₋₃₀ monovalent hydrocarbon group having a functional group selected from the group consisting of primary amino group, primary amino group protected by a hydrolysable protecting group, a residue of onium salt derived from primary amine, isocyanate group, thioisocyanate group, imine group, imine residue, amido group, secondary amino group protected by a hydrolysable protecting group, cyclic secondary amino group, a residue of onium salt derived from cyclic secondary amine, acyclic secondary amino group, a residue of onium salt derived from acyclic secondary amine, a residue of triester of isocyanuric acid, cyclic tertiary amino group, acyclic tertiary amino group, nitrile group, pyridine residue, a residue of onium salt derived from cyclic tertiary amine, and a residue of onium salt derived from acyclic tertiary amine; and ii) a normal, branched, alicyclic or aromatic C₁₋₃₀ monovalent hydrocarbon group which may contain at least one hetero atom selected from the group consisting of oxygen atom, sulfur atom and phosphorous atom.

### -- Natural rubber --

The rubber component contains natural rubber. A content of natural rubber in the rubber component is preferably ≥ 10 mass %, more preferably ≥ 20 mass %, and preferably ≤ 60 mass %, more preferably ≤ 50 mass %. Setting a content of natural rubber in the rubber component to be ≥ 10 mass % ensures more explicit manifestation of superior physical properties of natural rubber than otherwise, thereby further improving wet performance and reducing rolling resistance of a tire having rubber composition applied thereto. Setting a content of natural rubber in the rubber component to be ≤ 60 mass % allows a content of the high-Tg modified SBR and/or a content of the low-Tg modified SBR described below to be increased.

### -- High-Tg modified SBR --

The high-Tg modified styrene-butadiene rubber (which may occasionally be abbreviated to the "high-Tg modified SBR") has a glass transition temperature (Tg) higher than that of the low-Tg modified styrene-butadiene rubber described below. That is, "high-Tg" of the high-Tg modified styrene-butadiene rubber and "low-Tg" of the low-Tg modified styrene-butadiene rubber indicate that the glass transition temperature (Tg) of one modified SBR is high/low relative to the Tg of the other modified SBR and do not mean that each Tg is higher/lower than a certain temperature.

The glass transition temperature (Tg) of the high-Tg modified styrene-butadiene rubber is preferably in the range of -5 °C to -35 °C and more preferably in the range of -10 °C to -30 °C. A relatively high Tg of the high-Tg modified SBR enhances affinity of the SBR to the filler, so that the filler can obtain better dispersibility than otherwise.

Both ends of the high-Tg modified styrene-butadiene rubber have been modified and at least one end thereof has been modified with an alkoxysilane. Examples of a modifying method in connection with the high-Tg modified SBR include those disclosed in WO 2003/046020 A1 and JP 2007-217562 A, in which a high-Tg modified SBR can be manufactured by causing an active terminal end of SBR to react with an optionally selected alkoxysilane (a modifying agent).

Although type of a modifying agent for obtaining the high-Tg modified SBR is not particularly restricted, use of a modifying agent containing a compound represented by general formula (2) shown below (alkoxysilane) is preferable in the present disclosure.

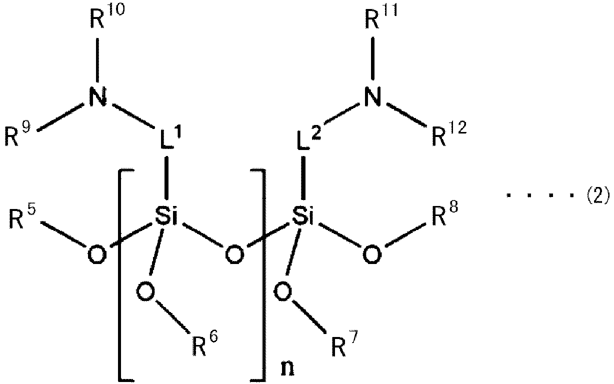

It is possible to improve dispersibility of a filler such as silica by using, as the rubber component, styrene-butadiene rubber modified by a modifying agent containing a compound i) represented by the general formula (2) and ii) having oligosiloxane and tertiary amino group as groups exhibiting affinity to the filler. The rubber composition of the present disclosure, in which dispersibility of the filler is improved accordingly, can significantly improve the low loss property thereof, so that a tire having the rubber composition applied thereto can significantly reduce rolling resistance thereof.

In the general formula (2), each of R⁵ to R¹² independently represents a C₁₋₂₀ alkyl group; each of L¹ and L² independently represents a C₁₋₂₀ alkylene group; and "n" represents an integer in the range of 2 to 4.

Specifically, each of R⁵ to R⁸ independently represents a substituted or unsubstituted C₁₋₂₀ alkyl group in the general formula (2). In a case where any of R⁵ to R⁸ is substituted, each of them may independently be substituted with one or more substituent groups selected from the group consisting of a C₁₋₁₀ alkyl group, a C₃₋₁₀ cycloalkyl group, a C₁₋₁₀ alkoxy group, a C₄₋₁₀ cycloalkoxy group, a C₆₋₁₂ aryl group, a C₆₋₁₂ aryloxy group, a C₂₋₁₂ alkanoyloxy group (Ra-COO-, wherein Ra represents a C₁₋₉ alkyl group), a C₇₋₁₃ aralkyloxy group, a C₇₋₁₃ arylalkyl group, and a C₇₋₁₃ alkylaryl group.

More specifically, each of R⁵ to R⁸ may independently represent a substituted or unsubstituted C₁₋₁₀ alkyl group. Even more specifically, each of R⁵ to R⁸ may independently represent a substituted or unsubstituted C₁₋₆ alkyl group.

Further, each of R⁹ to R¹² independently represents a substituted or unsubstituted C₁₋₂₀ alkyl group in the general formula (2). Specifically, each of R⁹ to R¹² may independently represent a substituted or unsubstituted C₁₋₁₀ alkyl group. More specifically, each of R⁹ to R¹² may independently represent a substituted or unsubstituted C₁₋₆ alkyl group. In a case where any of R⁹ to R¹² is substituted, each of them may be substituted with one or more substituent groups as described above in connection with R⁵ to R⁸.

It should be noted that, if R⁹ to R¹² were not alkyl groups but hydrolysable substituent groups, the chemical bonds of N-R⁹R¹⁰ and N-R¹¹R¹² would be hydrolyzed to N-H under the presence of moisture, which could adversely affect processability of the polymer.

More specifically, each of R⁵ to R⁸ may represent methyl or ethyl group and each of R⁹ to R¹² may represent a C₁₋₁₀ alkyl group in the compound represented by the general formula (2).

The amino groups or N-R⁹R¹⁰ and N-R¹¹R¹² in the compound represented by the general formula (2) are preferably tertiary amino groups. Those tertiary amino groups allow the compound represented by the general formula (2) and the resulting polymer to exhibit better processability when the compound is used as a modifying agent.

It should be noted that presence of an amino-protecting group or hydrogen bonded to any of R⁹ to R¹² may disturb satisfactory manifestation of the effect caused by the compound represented by the general formula (2). In a case where hydrogen is bonded to any of R⁹ to R¹², an anion reacts with the hydrogen and loses reactivity thereof in the modification process, thereby making it impossible for the modification reaction itself to proceed. In a case where an amino-protecting group is bonded to any of R⁹ to R¹², although the modification reaction somehow proceeds, the amino groups or N-R⁹R¹⁰ and N-R¹¹R¹² become primary/secondary amino groups when the amino-protecting group bonded to the terminal end of the polymer are released by hydrolysis in the subsequent process, thereby increasing viscosity of the mixture in the mixing process later and possibly deteriorating processability.

Each of L¹ and L² independently represents a substituted or unsubstituted C₁₋₂₀ alkylene group in the compound represented by the general formula (2).

More specifically, each of L¹ and L² may independently represent a C₁₋₁₀ alkylene group. Even more specifically, each of L¹ and L² may independently represent a C₁₋₆ alkylene group such as methylene, ethylene, or propylene group.

Regarding L¹ and L² of the compound represented by the general formula (2), the closer the N atom is to the Si atom in the molecule, the better effect can be obtained. However, if Si were directly bonded to N, the bonding between Si and N might be broken and the secondary amino group generated as a result of the breakage would probably flow away with water and be lost during the subsequent processes. In this case, the resulting modified SBR would naturally have difficulty in bond formation with a filler (the lost amino group was supposed to facilitate bond formation with a filler such as silica), whereby the effect of improving dispersibility of the filler would possibly be deteriorated. Accordingly, in view of an impact of the bond length between Si and N on the intended effect, each of L¹ and L² independently represents more preferably a C₁₋₃ alkylene group such as methylene, ethylene, or propylene group and more specifically propylene group. Each of L¹ and L² may be substituted with such a substituent group as described above in connection with R⁵ to R⁸.

The compound represented by the general formula (2) is preferably any one of the compounds represented by structural formulae (2-1)-(2-5) shown below because then better low loss property can be realized than otherwise.

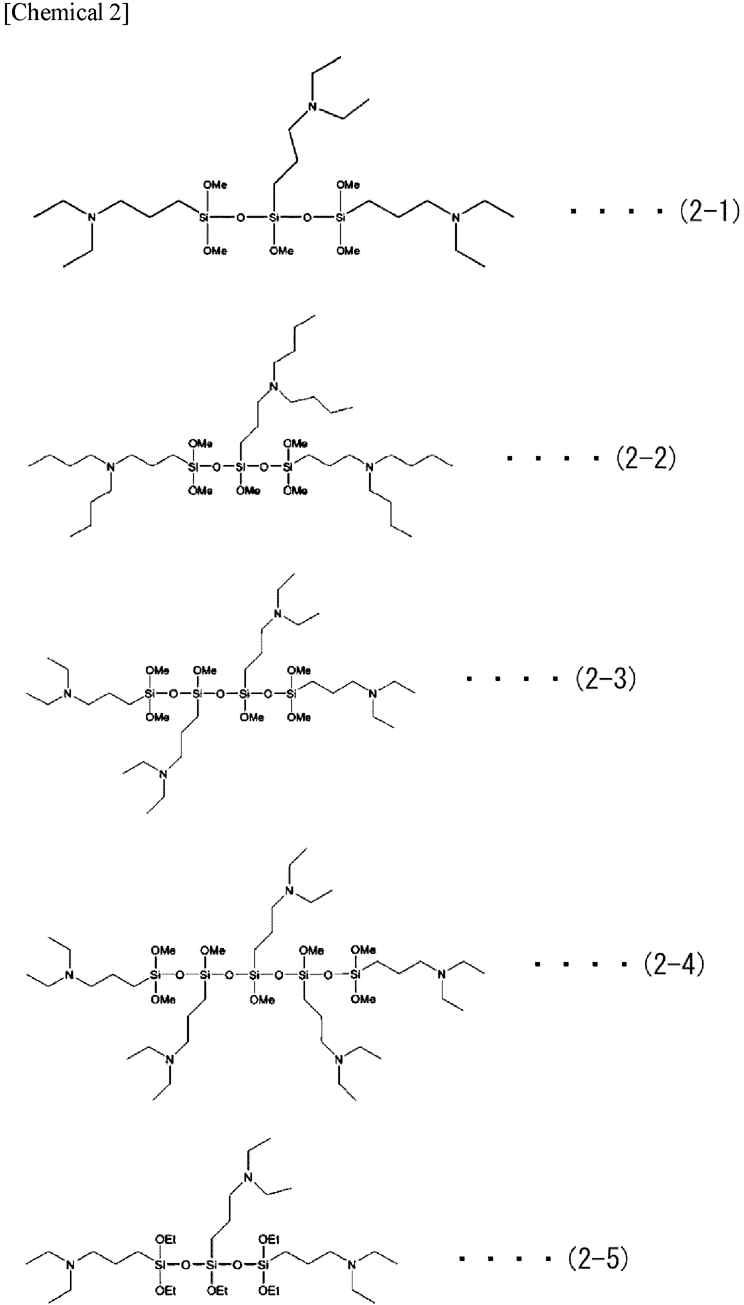

In the compound represented by the general formula (2), the alkoxysilane structure thereof is bonded to an active terminal end of SBR, while three or more amino groups bonded to the Si-O-Si structure and the terminal ends exhibit affinity to a filler such as silica, so that the compound can facilitate bonding between the filler and the modified SBR better than the conventional modifying agent including a single amino group in a molecule thereof. Further, the compound represented by the general formula (2) is uniformly bonded to the active terminal end of SBR, whereby the molecular weight distribution of the polymer does not widen after the coupling, as compared with before the coupling, when changes in the molecular weight distribution is observed before and after the coupling. That is, the compound represented by the general formula (2) does not deteriorate physical properties of the modified SBR itself but rather prevents aggregation of a filler from occurring in the rubber composition and improves dispersibility of the filler, thereby successfully improving processability of the rubber composition. Due to those superior effects, the rolling resistance and wet performance can be improved in a well balanced manner when the rubber composition is applied to a tire, in particular.

The compound represented by the general formula (2) can be manufactured by a condensation reaction represented by a reaction scheme shown below.

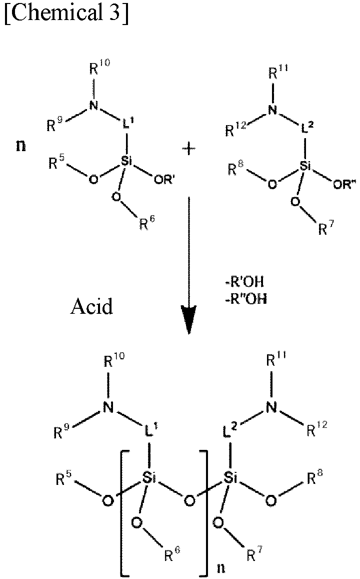

In the reaction scheme shown above, R⁵ to R¹², L¹ and L², as well as "n", are defined in the same manner as defined the general formula (2). R' and R" are any optional substituent groups which do not affect the condensation reaction described above. For example, each of R' and R" may independently represent the same substituent group as any one of R⁵ to R⁸.

The reaction shown in the reaction scheme proceeds under the presence of an acid, wherein type of the acid is not restricted as long as the acid is one generally used for condensation reactions. One skilled in the art may select the most appropriate acid in accordance with various process variables including the type of a reactor for use in the reaction, the starting materials, the reaction temperature, and the like.

It is possible to obtain a modified SBR having a molecular weight distribution (Mw/Mn, which may be referred to as "polydispersity index (PDI)") in the range of 1.1 to 3.0, which distribution is relatively narrow, by carrying out modification using a modifying agent containing the compound represented by the general formula (2). In a case where the molecular weight distribution of the modified SBR exceeds 3.0 or is less than 1, tensile properties and viscoelasticity of the rubber composition may deteriorate when the modified SBR is applied to the rubber composition. The molecular weight distribution of the modified SBR is preferably in the range of 1.3 to 2.0 in terms of explicitly manifesting an effect of improving tensile properties and viscoelasticity of the rubber composition by controlling the molecular weight distribution of the modified SBR. It should be noted that the molecular weight distribution of the modified SBR can be kept similar to the molecular weight distribution of the styrene-butadiene rubber prior to modification, by using the modifying agent described above.

The molecular weight distribution of the modified SBR can be calculated from a ratio (Mw/Mn) of the weight average molecular weight (Mw) with respect to the number average molecular weight (Mn). The number average molecular weight (Mn) represents the overall average of respective polymer molecular weights, calculated by measuring the molecular weights of respective "n" polymer molecules, summing up the molecular weights, and dividing the sum by "n". The weight average molecular weight (Mw) represents a molecular weight distribution of the polymer compositions. The average of the overall molecular weights may be expressed by a unit of gram per mole (g/mol).

Each of the weight average molecular weight and the number average molecular weight represents a molecular weight in terms of polystyrene determined by the analysis using gel permeation chromatography (GPC).

The modified SBR, satisfying the requirement related to the molecular weight distribution described above, simultaneously has the number average molecular weight (Mn) in the range of 50,000 g/mol to 2,000,000 g/mol and may more specifically have the number average molecular weight in the range of 200,000 g/mol to 800,000 g/mol. The modified SBR has the weight average molecular weight (Mw) in the range of 100,000 g/mol to 4,000,000 g/mol and may more specifically have the weight average molecular weight in the range of 300,000 g/mol to 1,500,000 g/mol.

In a case where the weight average molecular weight (Mw) of the modified SBR is less than 100,000 g/mol or the number average molecular weight (Mn) thereof is less than 50,000 g/mol, tensile properties of the rubber composition may deteriorate when the modified SBR is applied to the rubber composition. In a case where the weight average molecular weight (Mw) of the modified SBR exceeds 4,000,000 g/mol or the number average molecular weight (Mn) thereof exceeds 2,000,000 g/mol, workability of the rubber composition may deteriorate due to deterioration of processability of the modified SBR, which makes the mixing and kneading operation difficult and thus possibly makes it difficult to satisfactorily improve physical properties of the rubber composition.

More specifically, in a case where the modified SBR simultaneously satisfies the requirements related to the weight average molecular weight (Mw) and the number average molecular weight (Mn) thereof described above, as well as the requirement related to the molecular weight distribution thereof, both viscoelasticity and processability of the rubber composition can be improved in a well balanced manner when the modified SBR is applied to the rubber composition.

A vinyl bond content of the butadiene portion is preferably ≥ 5 %, more preferably ≥ 10 %, and preferably ≤ 60 % in the modified SBR. The glass transition temperature can be adjusted within the preferable range by setting a vinyl content of the butadiene portion to be within the ranges described above.

Mooney viscosity (MV) at 100 °C, of the modified SBR, is in the range of 40 to 140 and may specifically be in the range of 60 to 100. The modified SBR can exhibit better processability when it has Mooney viscosity in the range described above, than otherwise.

The Mooney viscosity can be measured by using a large rotor of a Mooney viscometer such as "MV2000E" manufactured by Monsanto Company at 100 °C and the rotor speed of 2 ± 0.02 rpm. The measurement can be carried out by: leaving the modified SBR at the room temperature (23 ± 3 °C) for at least 30 minutes; then collecting a test sample (27 ± 3 g) from the modified SBR; fill the inside of the die cavity with the test sample; and measuring MV of the test sample by operating the platen.

It is preferable that one end of the high-Tg modified SBR has been modified with a modifying agent containing the compound represented by the general formula (2), as described above. In addition, the other end of the high-Tg modified SBR has been modified with a modifying agent containing the compound represented by general formula (3) shown below. It is possible to further improve dispersibility of a filler in the rubber composition and make low rolling resistance and superior wet performance compatible with each other in a tire having the rubber composition applied thereto at a higher level, by modifying both ends of the high-Tg modified SBR.

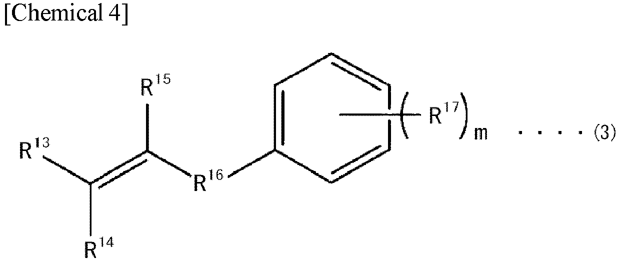

**In** the general formula (3), each of R¹³ to R¹⁵ independently represents: hydrogen; a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; or a C₃₋₃₀ heterocyclic group.

Further, in the general formula (3), R¹⁶ represents: single bond; a C₁₋₂₀ alkylene group substituted/unsubstituted with a substituent group; a C₅₋₂₀ cycloalkylene group substituted/unsubstituted with a substituent group; or a C₅₍₆₎₋₂₀ arylene group substituted/unsubstituted with a substituent group. In this respect, the substituent group is a C₁₋₁₀ alkyl group, a C₅₋₁₀ cycloalkyl group, or a C₆₋₂₀ aryl group.

Yet further, in the general formula (3), R¹⁷ represents: a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; a C₃₋₃₀ heterocyclic group; or a functional group represented by general formula (3a) or general formula (3b) shown below, wherein "m" represents an integer in the range of 1 to 5, at least one of R¹⁷(s) is a functional group represented by the general formula (3a) or the general formula (3b), and a plurality of R¹⁷s may be of either the same type or different types when m is an integer in the range of 2 to 5.

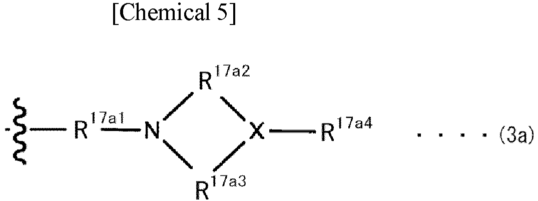

In the general formula (3a), R^{17a1} represents: a C₁₋₂₀ alkylene group substituted/unsubstituted with a substituent group; a C₅₋₂₀ cycloalkylene group substituted/unsubstituted with a substituent group; or a C₆₋₂₀ arylene group substituted/unsubstituted with a substituent group. In this respect, the substituent group is a C₁₋₁₀ alkyl group, a C₅₋₁₀ cycloalkyl group, or a C₆₋₂₀ aryl group.

Further, In the general formula (3a), each of R^{17a2} and R^{17a3} independently represents a C₁₋₁₀ alkyl; a C₅₋₁₀ cycloalkyl group; or a C₁₋₂₀ alkylene group unsubstituted/substituted with a C₆₋₂₀ aryl group.

Yet further, in the general formula (3a), R^{17a4} represents: hydrogen; a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; or a C₃₋₃₀ heterocyclic group. "X" represents N, O or S atom, wherein R^{17a4} does not exist when X is O or S.

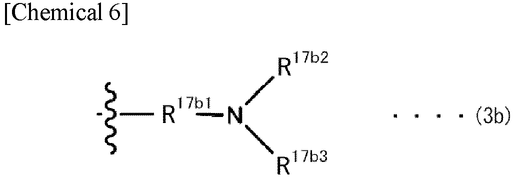

In the general formula (3b), R^{17b1} represents: a C₁₋₂₀ alkylene group substituted/unsubstituted with a substituent group; a C₅₋₂₀ cycloalkylene group substituted/unsubstituted with a substituent group; or a C₆₋₂₀ arylene group substituted/unsubstituted with a substituent group. In this respect, the substituent group is a C₁₋₁₀ alkyl group, a C₅₋₁₀ cycloalkyl group, or a C₆₋₂₀ aryl group.

Further, in the general formula (3b), each of R^{17b2} and R^{17b3} independently represents: a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; or a C₃₋₃₀ heterocyclic group.

Yet further, in the general formula (3), each of R¹³ to R¹⁵ independently represents: hydrogen; a C₁₋₁₀ alkyl group; a C₂₋₁₀ alkenyl group; or a C₂₋₁₀ alkynyl group. R¹⁶ represents single bond or an unsubstituted C₁₋₁₀ alkylene group. R¹⁷ represents: a C₁₋₁₀ alkyl group; a C₂₋₁₀ alkenyl group; a C₂₋₁₀ alkynyl group; or a functional group represented by the general formula (3a) or the general formula (3b) shown above. In the general formula (3a), R^{17a1} represents an unsubstituted C₁₋₁₀ alkylene group, each of R^{17a2} and R^{17a3} independently represents an unsubstituted C₁₋₁₀ alkylene group, R^{17a4} represents: a C₁₋₁₀ alkyl group; a C₅₋₂₀ cycloalkyl group; a C₆₋₂₀ aryl group; or a C₃₋₂₀ heterocyclic group. In the general formula (3b), R^{17b1} represents an unsubstituted C₁₋₁₀ alkylene group, each of R^{17b2} and R^{17b3} independently represents a C₁₋₁₀ alkyl group; a C₅₋₂₀ cycloalkyl group; a C₆₋₂₀ aryl group; or a C₃₋₂₀ heterocyclic group.

More specifically, the compound represented by the general formula (3) may be any of the compounds represented by structural formulae (3-1)-(3-3) shown below.

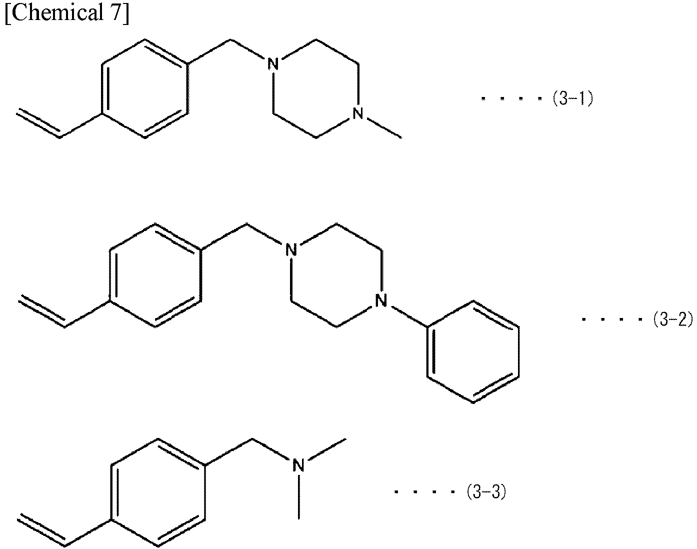

In a case where styrene-butadiene rubber described above is to be modified by using a modifying agent containing the compound represented by the general formula (3), the modifying agent containing the compound represented by the general formula (3) is used as a modification initiator.

Specifically, for example, it is possible to provide the styrene-butadiene rubber with a modifying group derived from the compound represented by the general formula (3), by polymerizing butadiene monomer and styrene monomer under the presence of a modifying agent containing the compound represented by the general formula (3) in a hydrocarbon solvent.

A ratio of the high-Tg modified SBR in the rubber composition, which is selected such that the aforementioned mass ratio or (high-Tg modified SBR content/low-Tg modified SBR content) is larger than 1, is preferably ≥ 20 mass %, more preferably ≥ 30 mass %, and preferably ≤ 70 mass %, more preferably ≤ 60 mass %. Setting a content of the high-Tg modified SBR in the rubber component to be ≥ 20 mass % further improves wet performance and further reduces rolling resistance of a tire having rubber composition applied thereto. Setting a content of the high-Tg modified SBR in the rubber component to be ≤ 70 mass % allows a content of natural rubber described above and a content of the low-Tg modified SBR described below to be increased.

### -- Low-Tg modified SBR --

The low-Tg modified styrene-butadiene rubber (which may occasionally be abbreviated to the "low-Tg modified SBR") has a glass transition temperature (Tg) lower than that of the high-Tg modified styrene-butadiene rubber described above. That is, "high-Tg" of the high-Tg modified styrene-butadiene rubber and "low-Tg" of the low-Tg modified styrene-butadiene rubber indicate that the glass transition temperature (Tg) of one modified SBR is high/low relative to the Tg of the other modified SBR and do not mean that each Tg is higher/lower than a certain temperature.

The glass transition temperature (Tg) of the low-Tg modified styrene-butadiene rubber is preferably in the range of -75 °C to -45 °C and more preferably in the range of -70 °C to -50 °C. A relatively low Tg of the low-Tg modified SBR allows the low loss property and the wet performance of the rubber composition to be improved with better balance therebetween than otherwise.

A difference in glass transition temperature (Tg) between the low-Tg modified SBR and the high-Tg modified SBR described above is preferably ≥ 30 °C, more preferably ≥ 35 °C and preferably ≤ 60 °C, more preferably ≤ 50 °. An effect caused by inclusion of plural types of modified SBRs having different Tg values is conspicuous and the low loss property and the wet performance of the rubber composition improves with even better balance therebetween when a difference in glass transition temperature (Tg) between the low-Tg modified SBR and the high-Tg modified SBR is set to be within the aforementioned ranges.

One end of the low-Tg modified styrene-butadiene rubber has been modified with an alkoxysilane. The other end of the low-Tg modified styrene-butadiene rubber, which may be modified with a modifying agent other than an alkoxysilane, is preferably left unmodified. In the present disclosure, the expression that "the other end is left unmodified" indicates that the other end does not have a functional group but is constituted of a hydrocarbon group.

The low-Tg modified styrene-butadiene rubber can be manufactured by, for example, causing an active terminal end of SBR to react with an optionally selected alkoxysilane (a modifying agent) according to the method disclosed in WO 2003/046020 A1 or JP 2007-217562 A.

Although type of a modifying agent for obtaining the low-Tg modified SBR is not particularly restricted, use of an alkoxysilane compound represented by general formula (4) shown below is preferable in the present disclosure.

R¹⁹ₐ-Si-(OR²⁰)₄₋ₐ ··· (4)

In the general formula (4), each of R¹⁹ and R²⁰ independently represents a C₁₋₂₀ monovalent aliphatic hydrocarbon group or a C₆₋₁₈ monovalent aromatic hydrocarbon group, wherein "a" is an integer in the range of 0 to 2; respective OR²⁰s may belong to either the same type or different types when a plurality of OR²⁰s exists; and no active proton is included in the molecule.

An aminoalkoxysilane compound represented by general formula (5) shown below is also preferable as a modifying agent for obtaining the low-Tg modified SBR.

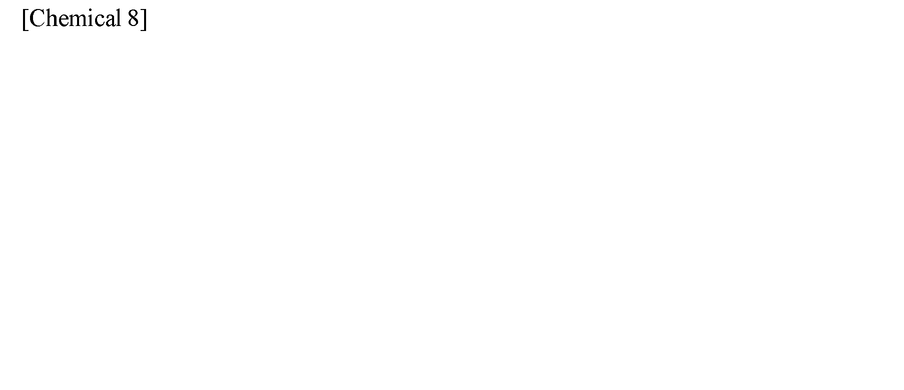

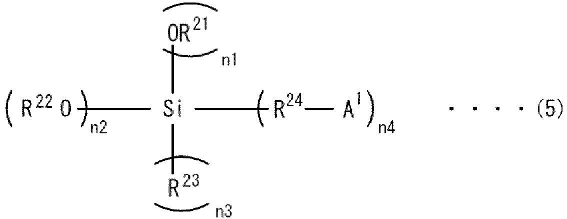

In the general formula (5), n1 + n2 + n3 + n4 = 4, wherein n2 is an integer in the range of 1 to 4 and each of n1, n3 and n4 is an integer in the range of 0 to 3.

A¹ represents at least one functional group selected from the group consisting of a residue of saturated cyclic tertiary amine compound, a residue of unsaturated cyclic tertiary amine compound, a ketimine residue, nitrile group, (thio)isocyanate group, isocyanuric acid trihydrocarbyl ester group, (nitrile group,) pyridine group, (thio)ketone group, amido group, and primary/secondary amino group having a hydrolysable group. A¹s may be of either the same type or different types when n4 is ≥ 2. A¹ may be a divalent group which is bonded to Si to form a cyclic structure.

R²¹ represents a C₁₋₂₀ monovalent aliphatic/alicyclic hydrocarbon group or a C₆₋₁₈ monovalent aromatic hydrocarbon group. R²¹s may be of either the same type or different types when n1 is ≥ 2.

R²³ represents a C₁₋₂₀ monovalent aliphatic/alicyclic hydrocarbon group, a C₆₋₁₈ monovalent aromatic hydrocarbon group, or halogen atom. R²³s may be of either the same type or different types when n3 is ≥ 2.

R²² represents a C₁₋₂₀ monovalent aliphatic/alicyclic hydrocarbon group or a C₆₋₁₈ monovalent aromatic hydrocarbon group and may include nitrogen atom and/or silicon atom therein. R²²s may be of either the same type or different types or collectively form a ring when n2 is ≥ 2.

R²⁴ represents a C₁₋₂₀ divalent aliphatic/alicyclic hydrocarbon group or a C₆₋₁₈ divalent aromatic hydrocarbon group. R²⁴s may be of either the same type or different types when n4 is ≥ 2.

Trimethylsilyl group or tert-butyldimethylsilyl group is preferable and trimethylsilyl group is particularly preferable as the hydrolysable group of the primary/secondary amino group having a hydrolysable group described above.

The aminoalkoxysilane compound represented by the general formula (5) is preferably an aminoalkoxysilane compound represented by general formula (6) shown below.

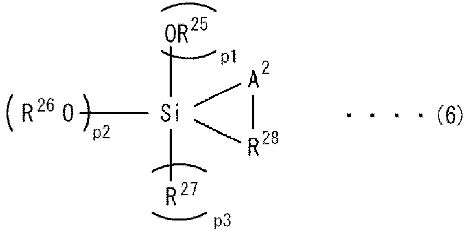

In the general formula (6), p1 + p2 + p3 = 2, wherein p2 is an integer in the range of 1 to 2 and each of p1, p3 is an integer in the range of 0 to 1.

A² represents NRa (Ra is a monovalent hydrocarbon group, a hydrolysable group, or a nitrogen-containing organic group).

R²⁵ represents a C₁₋₂₀ monovalent aliphatic/alicyclic hydrocarbon group or a C₆₋₁₈ monovalent aromatic hydrocarbon group.

R²⁷ represents a C₁₋₂₀ monovalent aliphatic/alicyclic hydrocarbon group, a C₆₋₁₈ monovalent aromatic hydrocarbon group, or a halogen atom.

R²⁶ represents a C₁₋₂₀ monovalent aliphatic/alicyclic hydrocarbon group or a C₆₋₁₈ monovalent aromatic hydrocarbon group or a C₆₋₁₈ monovalent nitrogen-containing organic group, wherein each of those groups may include nitrogen atom and/or silicon atom therein. R²⁶s may be of either the same type or different types or collectively form a ring when p2 = 2.

R²⁸ represents a C₁₋₂₀ divalent aliphatic/alicyclic hydrocarbon group or a C₆₋₁₈ divalent aromatic hydrocarbon group.

Trimethylsilyl group or tert-butyldimethylsilyl group is preferable and trimethylsilyl group is particularly preferable as the hydrolysable group when "Ra" described above is a hydrolysable group.

Furthermore, the aminoalkoxysilane compound represented by the general formula (5) is preferably an aminoalkoxysilane compound represented by general formula (7) or general formula (8) shown below.

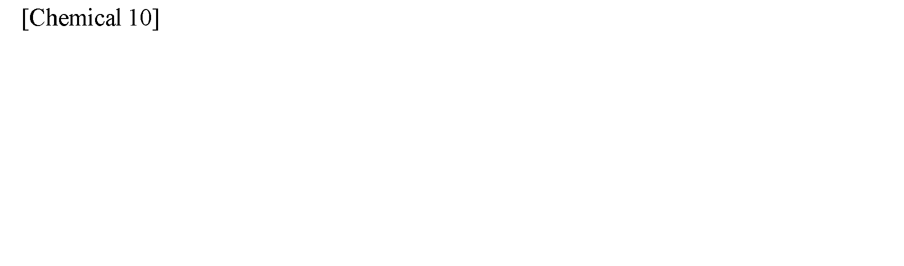

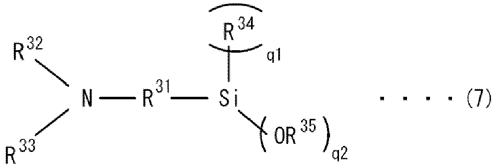

In the general formula (7), q1 + q2 = 3, wherein q1 is an integer in the range of 0 to 2 and q2 is an integer in the range of 1 to 3.

R³¹ represents a C₁₋₂₀ divalent aliphatic/alicyclic hydrocarbon group or a C₆₋₁₈ divalent aromatic hydrocarbon group.

Each of R³² and R³³ independently represents a hydrolysable group, a C₁₋₂₀ monovalent aliphatic/alicyclic hydrocarbon group or a C₆₋₁₈ monovalent aromatic hydrocarbon group.

R³⁴ represents a C₁₋₂₀ monovalent aliphatic/alicyclic hydrocarbon group or a C₆₋₁₈ monovalent aromatic hydrocarbon group. R³⁴s may be of either the same type or different types when q1 = 2.

R³⁵ represents a C₁₋₂₀ monovalent aliphatic/alicyclic hydrocarbon group or a C₆₋₁₈ monovalent aromatic hydrocarbon group. R³⁵s may be of either the same type or different types when q2 is ≥ 2.

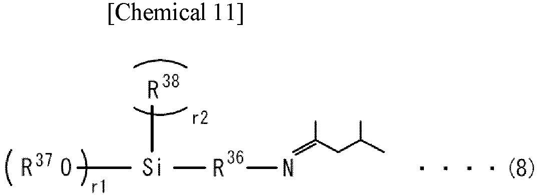

In the general formula (8), r1 + r2 = 3, wherein r1 is an integer in the range of 1 to 3 and r2 is an integer in the range of 0 to 2.

R³⁶ represents a C₁₋₂₀ divalent aliphatic/alicyclic hydrocarbon group or a C₆₋₁₈ divalent aromatic hydrocarbon group.

R³⁷ represents dimethylaminomethyl, dimethylaminoethyl, diethylaminomethyl, diethylaminoethyl, methylsilyl(methyl)aminomethyl, methylsilyl(methyl)aminoethyl, methylsilyl(ethyl)aminomethyl, methylsilyl(ethyl)aminoethyl, dimethylsilylaminomethyl, dimethylsilylaminoethyl group, a C₁₋₂₀ monovalent aliphatic/alicyclic hydrocarbon group, or a C₆₋₁₈ monovalent aromatic hydrocarbon group. R³⁷s may be of either the same type or different types when r1 is ≥ 2.

R³⁸ represents a C₁₋₂₀ hydrocarbyloxy group, a C₁₋₂₀ monovalent aliphatic/alicyclic hydrocarbon group or a C₆₋₁₈ monovalent aromatic hydrocarbon group. R³⁸s may be of either the same type or different types when r2 = 2.

Specific examples of aminoalkoxysilane compound represented by the general formula (8) include N-(1,3-dimethylbutylidene)-3-triethoxysilyl-1-propaneamine.

Furthermore, the aminoalkoxysilane compound represented by the general formula (5) is preferably an aminoalkoxysilane compound represented by general formula (9) or general formula (10) shown below.

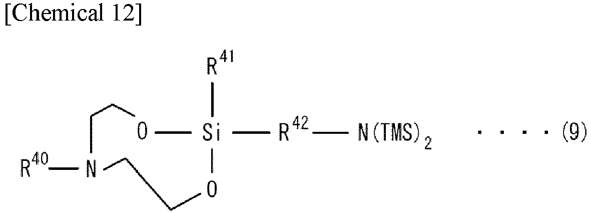

In the general formula (9), R⁴⁰ represents trimethylsilyl group, a C₁₋₂₀ monovalent aliphatic/alicyclic hydrocarbon group or a C₆₋₁₈ monovalent aromatic hydrocarbon group. R⁴¹ represents a C₁₋₂₀ hydrocarbyloxy group, a C₁₋₂₀ monovalent aliphatic/alicyclic hydrocarbon group or a C₆₋₁₈ monovalent aromatic hydrocarbon group. R⁴² represents a C₁₋₂₀ divalent aliphatic/alicyclic hydrocarbon group or a C₆₋₁₈ divalent aromatic hydrocarbon group. "TMS" represents trimethylsilyl group (the same shall apply hereinafter).

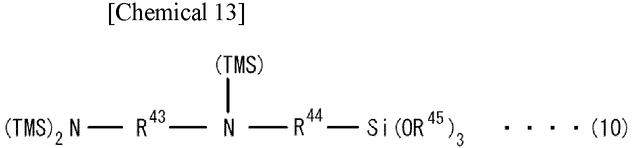

In the general formula (10), each of R⁴³ and R⁴⁴ independently represents a C₁₋₂₀ divalent aliphatic/alicyclic hydrocarbon group or a C₆₋₁₈ divalent aromatic hydrocarbon group. Each of R⁴⁵s represents a C₁₋₂₀ monovalent aliphatic/alicyclic hydrocarbon group or a C₆₋₁₈ monovalent aromatic hydrocarbon group, wherein R⁴⁵s may be of either the same type or different types.

Furthermore, the aminoalkoxysilane compound represented by the general formula (5) is preferably an aminoalkoxysilane compound represented by general formula (11) or general formula (12) shown below.

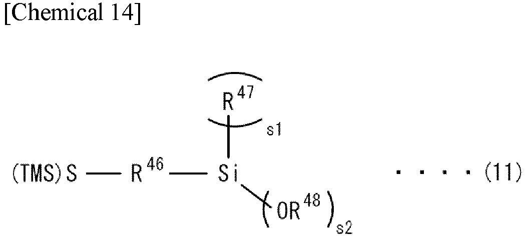

In the general formula (11), s1 + s2 = 3, wherein s1 is an integer in the range of 0 to 2 and s2 is an integer in the range of 1 to 3. R⁴⁶ represents a C₁₋₂₀ divalent aliphatic/alicyclic hydrocarbon group or a C₆₋₁₈ divalent aromatic hydrocarbon group. Each of R⁴⁷ and R⁴⁸ independently represents a C₁₋₂₀ monovalent aliphatic/alicyclic hydrocarbon group or a C₆₋₁₈ monovalent aromatic hydrocarbon group. R⁴⁷s may be of either the same type or different types when s1 = 2. R⁴⁸s may be of either the same type or different types when s2 ≥ 2.

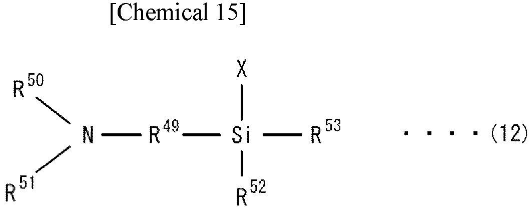

In the general formula (12), "X" represents a halogen atom, R⁴⁹ represents a C₁₋₂₀ divalent aliphatic/alicyclic hydrocarbon group or a C₆₋₁₈ divalent aromatic hydrocarbon group. Each of R⁵⁰ and R⁵¹ may independently represent a hydrolysable group, a C₁₋₂₀ monovalent aliphatic/alicyclic hydrocarbon group or a C₆₋₁₈ monovalent aromatic hydrocarbon group. Alternatively, R⁵⁰ and R⁵¹ may be bonded to each other to form a divalent organic group. Each of R⁵² and R⁵³ independently represents halogen atom, hydrocarbyloxy group, a C₁₋₂₀ monovalent aliphatic/alicyclic hydrocarbon group or a C₆₋₁₈ monovalent aromatic hydrocarbon group. Each of R⁵⁰ and R⁵¹ is preferably a hydrolysable group, wherein the hydrolysable group is preferably trimethylsilyl group or tert-butyldimethylsilyl group and particularly preferably trimethylsilyl group.

Furthermore, the aminoalkoxysilane compound represented by the general formula (5) is preferably an aminoalkoxysilane compound represented by any of general formulae (13), (14), (15) and (16) shown below.

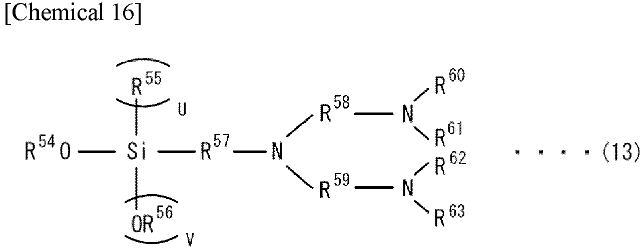

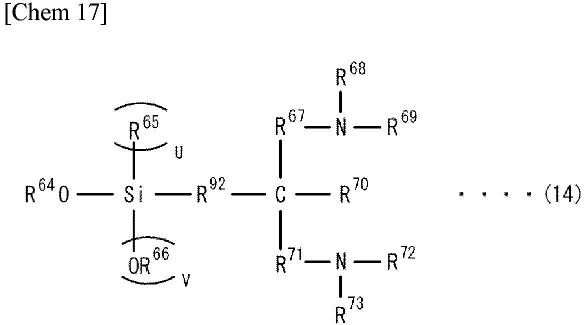

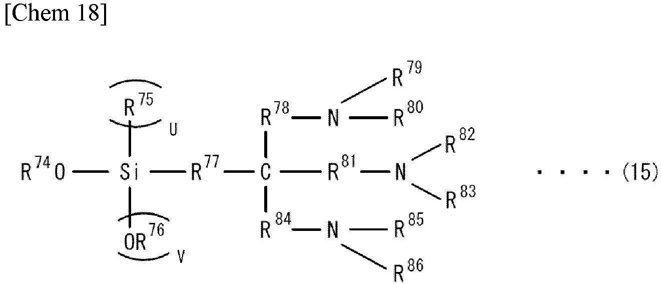

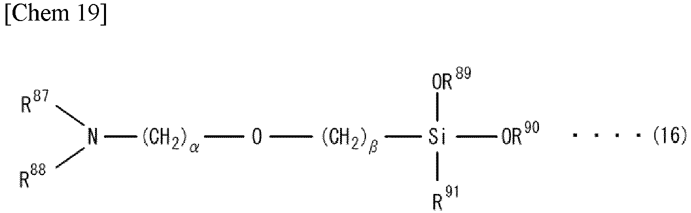

In the general formulae (13) to (16), each of "U" and "V" represents an integer in the range of 0 to 2, wherein U + V = 2. R¹⁴ to R⁹²⁽⁹¹⁾ in the general formulae (13) to (16), which may be of either the same type or different types, is a C₁₋₂₀ monovalent/divalent aliphatic/alicyclic hydrocarbon group or a C₆₋₁₈ monovalent/divalent aromatic hydrocarbon group. Each of "α" and "β" in the general formula (16) represents an integer in the range of 0 to 5.

Among the compounds satisfying the general formula (13), the general formula (14) and the general formula (15), N1,N1,N7,N7-tetramethyl-4-((trimethoxysilyl)methyl)heptane-1,7-diamine, 2-((hexyl-dimethoxysilyl)methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are preferable.

Further, among the compounds satisfying the general formula (16), N,N-dimethyl-2-(3-(dimethoxymethylsilyl)propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propane-1-amine are preferable.

A ratio of the low-Tg modified SBR in the rubber composition, which is selected such that the aforementioned mass ratio or (high-Tg modified SBR content/low-Tg modified SBR content) is larger than 1, is preferably ≥ 5 mass %, more preferably ≥ 10 mass %, and preferably ≤ 45 mass %, more preferably ≤ 40 mass %. Setting a content of the low-Tg modified SBR in the rubber component to be ≥ 5 mass % further improves wet performance and further reduces rolling resistance of a tire having rubber composition applied thereto. Setting a content of the low-Tg modified SBR in the rubber component to be ≤ 45 mass % allows a content of natural rubber and a content of the high-Tg modified SBR each described above to be increased.

The mass ratio of a content of the high-Tg modified styrene-butadiene rubber (the high-Tg modified SBR) with respect to a content of the low-Tg modified styrene-butadiene rubber (the low-Tg modified SBR), i.e., high-Tg modified SBR content/low-Tg modified SBR content, is to be larger than 1, preferably ≥ 1.1, more preferably ≥ 1.2, and preferably ≤ 3, more preferably ≤ 2.8. It is possible to further improve dispersibility of a filler and thus further improve wet performance of a tire having the rubber composition applied thereto, without deteriorating rolling resistance thereof, by setting the mass ratio (high-Tg modified SBR content/low-Tg modified SBR content) to be in the preferable ranges described above.

### -- Other rubber components --

The rubber component may further contain other rubber component(s), in addition to the natural rubber (NR), the high-Tg modified SBR, and the low-Tg modified SBR described above. Examples of the other rubber components include butadiene rubber (BR), isoprene rubber (IR), butyl rubber (IIR), ethylene-propylene copolymer, and the like. Either a single type or combination/blend of two or more types of those examples may be used as the other rubber components.

A content of the other rubber components in the rubber component is preferably ≤ 10 mass %, more preferably ≤ 5 mass %, and may be 0 mass % in a case where rubber component contains the other rubber components therein.

### (Filler)

The rubber composition of the present disclosure contains a filler therein. The reinforcement property of the rubber composition improves when the rubber composition contains a filler.

A content of a filler in the rubber composition is preferably in the range of 40 to 125 parts by mass with respect to 100 parts by mass of the rubber component. The rubber composition has satisfactory reinforcement property, whereby wear resistance of a tire using the rubber composition satisfactorily enhances, when a content of a filler in the rubber composition is ≥ 40 parts by mass with respect to 100 parts by mass of the rubber component. The rubber composition can avoid too high elastic modulus, whereby wet performance of a tire using the rubber composition satisfactorily improves, when a content of a filler in the rubber composition is ≤ 125 parts by mass with respect to 100 parts by mass of the rubber component.

The content of a filler in the rubber composition is preferably ≥ 48 parts by mass, more preferably ≥ 53 parts by mass, even more preferably ≥ 58 parts by mass, and particularly preferably ≥ 62 parts by mass, with respect to 100 parts by mass of the rubber component in terms of further enhancing wear resistance of the tire. Further, the content of a filler in the rubber composition is preferably ≤ 105 parts by mass, more preferably ≤ 100 parts by mass, even more preferably ≤ 95 parts by mass, particularly preferably ≤ 90 parts by mass, and most preferably ≤ 85 parts by mass, with respect to 100 parts by mass of the rubber component in terms of further improving wet performance of the tire.

### -- Silica --

The filler preferably includes silica. The filler particularly preferably includes silica of which nitrogen adsorption specific surface area (according to the BET method) is in the range of ≥ 90 m²/g and < 330 m²/g. The wet performance of a tire having the rubber composition applied thereto can be further improved when the filler includes silica therein.

Wear resistance of a tire having the rubber composition applied thereto can be further enhanced when the nitrogen adsorption specific surface area (according to the BET method) of silica is ≥ 90 m²/g. Wet performance of a tire having the rubber composition applied thereto can be further improved when the nitrogen adsorption specific surface area (according to the BET method) of silica is < 330 m²/g.

The nitrogen adsorption specific surface area (according to the BET method) of silica is preferably ≥ 90 m²/g, more preferably ≥ 95 m²/g, even more preferably ≥ 150 m²/g, still even more preferably ≥ 170 m²/g, yet still even more preferably ≥ 180 m²/g, particularly preferably ≥ 190 m²/g, and most preferably ≥ 195 m²/g in terms of further enhancing wear resistance of a tire having the rubber composition applied thereto. On the other hand, the nitrogen adsorption specific surface area (according to the BET method) of silica is preferably ≤ 300 m²/g, more preferably ≤ 280 m²/g, even more preferably ≤ 270 m²/g, and particularly preferably ≤ 250 m²/g in terms of further improving wet performance of a tire having the rubber composition applied thereto.

Examples of the silica include wet silica (hydrated silica), dry silica (silicic anhydride), calcium silicate, aluminum silicate, and the like. Wet silica is preferable among those examples. Either a single type or combination of two or more types of those examples may be used as the silica.

A content of silica in the rubber composition is preferably ≥ 40 parts by mass, more preferably ≥ 50 parts by mass, and even more preferably ≥ 55 parts by mass, with respect to 100 parts by mass of the rubber component in terms of further improving wet performance of the tire. Further, the content of silica in the rubber composition is preferably ≤ 108 parts by mass, more preferably ≤ 100 parts by mass, even more preferably ≤ 90 parts by mass, particularly preferably ≤ 85 parts by mass, and most preferably ≤ 80 parts by mass, with respect to 100 parts by mass of the rubber component in terms of further improving wet performance of the tire.

### -- Carbon black --

The filler preferably includes carbon black. Carbon black reinforces vulcanized rubber, thereby enhancing wear resistance of the vulcanized rubber.

Type of the carbon black is not particularly restricted and examples thereof include GPF, FEF, HAF, ISAF, or SAF grade. Either a single type or combination of two or more types of those examples may be used as the carbon black.

A content of carbon black in the rubber composition is preferably ≥ 1 parts by mass, more preferably ≥ 2 parts by mass, and even more preferably ≥ 4 parts by mass, with respect to 100 parts by mass of the rubber component in terms of further enhancing wear resistance of a tire having the rubber composition applied thereto. Further, the content of carbon black in the rubber composition is preferably ≤ 30 parts by mass, more preferably ≤ 20 parts by mass, even more preferably ≤ 10 parts by mass, and particularly preferably ≤ 7 parts by mass, with respect to 100 parts by mass of the rubber component in terms of achieving satisfactory rolling resistance performance of a tire having the rubber composition applied thereto.

### -- Aluminum hydroxide --

The filler preferably includes aluminum hydroxide. Wet performance of a tire having the rubber composition applied thereto can be further improved when the filler includes aluminum hydroxide.

A content of aluminum hydroxide in the rubber composition is preferably ≥ 1 parts by mass, more preferably ≥ 3 parts by mass, and even more preferably ≥ 5 parts by mass, with respect to 100 parts by mass of the rubber component in terms of further improving wet performance of a tire having the rubber composition applied thereto. Further, the content of aluminum hydroxide in the rubber composition is preferably ≤ 30 parts by mass, more preferably ≤ 25 parts by mass, even more preferably ≤ 20 parts by mass, and particularly preferably ≤ 15 parts by mass, with respect to 100 parts by mass of the rubber component in terms of obtaining satisfactory workability of the rubber composition.

### -- Other fillers --

The filler may further include, for example, inorganic filler such as clay, talc, or calcium carbonate, in addition to silica, carbon black and aluminum hydroxide.

It is preferable that the carbon black, the aluminum hydroxide, and the other fillers described above are included in the filler such that a content of silica in the filler is ≥ 70 mass %. Wet performance of a tire having the rubber composition applied thereto can be further improved when a content of silica in the filler is ≥ 70 mass %. The content of silica in the filler is more preferably ≥ 80 mass %, even more preferably ≥ 85 mass %, and particularly preferably in the range of ≥ 90 mass % and < 100 mass %.

### (Resin)

The rubber composition of the present disclosure contains a resin. Hysteresis loss in the low temperature region increases, such that wet performance of a tire having the rubber composition applied thereto is successfully improved, when the rubber composition includes a resin.

A content of the resin is preferably in the range of 2 to 15 parts by mass with respect to 100 parts by mass of the rubber component. The intended effect is satisfactorily caused by the resin when a content of the resin in the rubber composition is ≥ 2 parts by mass with respect to 100 parts by mass of the rubber component. The resin hardly deposits from the rubber composition, whereby the intended effect can be satisfactorily caused by the resin, when a content of the resin in the rubber composition is ≤ 15 parts by mass with respect to 100 parts by mass of the rubber component. Accordingly, wet performance of a tire having the rubber composition applied thereto is successfully improved when a content of the resin is in the range of 2 to 15 parts by mass with respect to 100 parts by mass of the rubber component.

The content of the resin in the rubber composition is preferably ≥ 5 parts by mass, more preferably ≥ 7 parts by mass, and even more preferably ≥ 9 parts by mass with respect to 100 parts by mass of the rubber component in terms of further increasing the effect caused by the resin. The content of the resin in the rubber composition is preferably ≤ 14 parts by mass, more preferably ≤ 13 parts by mass, even more preferably ≤ 12 parts by mass, and particularly preferably ≤ 11 parts by mass with respect to 100 parts by mass of the rubber component in terms of suppressing deposition of the resin from a tire to avoid deterioration of the appearance of the tire.

### -- Hydrogenated resin --

The resin preferably includes a hydrogenated resin having the softening point higher than 110 °C and the weight average molecular weight in terms of polystyrene in the range of 200 g/mol to 1,600 g/mol. The hydrogenated resin exhibits good compatibility with the rubber component and controllably suppresses mobility of the rubber component, thereby successfully improving hysteresis loss (tanδ) property in the low temperature region in a selective manner, while maintaining satisfactory hysteresis loss (tanδ) property in the temperature region during normal running, so that low rolling resistance performance and wet performance of a tire having the rubber composition applied thereto can be further improved with better balance therebetween than otherwise.

It is possible to satisfactorily reinforce a tire having the rubber composition applied thereto and further enhance wear resistance of the tire when the softening point of the hydrogenated resin is higher than 110 °C. The softening point of the hydrogenated resin is preferably ≥ 116 °C, more preferably ≥ 120 °C, even more preferably ≥ 123 °C, and particularly preferably ≥ 127 °C in terms of obtaining satisfactorily high wear resistance of the tire. The softening point of the hydrogenated resin is preferably ≤ 160 °C, more preferably ≤ 150 °C, even more preferably ≤ 145 °C, and particularly preferably ≤ 141 °C in terms of obtaining satisfactorily processability of the rubber composition.

The hydrogenated resin hardly deposits from the rubber composition, thereby being able to satisfactorily cause an effect thereof as intended, when the weight average molecular weight in terms of polystyrene of the hydrogenated resin is ≥ 200 g/mol. The hydrogenated resin is satisfactorily compatible with the rubber component when the weight average molecular weight in terms of polystyrene thereof is ≤ 1,600 g/mol.

The weight average molecular weight in terms of polystyrene of the hydrogenated resin is more preferably ≥ 500 g/mol, even more preferably ≥ 550 g/mol, still even more preferably ≥ 600 g/mol, yet still even more preferably ≥ 650 g/mol, and particularly preferably ≥ 700 g/mol in terms of suppressing deposition of the hydrogenated resin from the rubber composition to avoid deterioration of the appearance of a tire. Further, the weight average molecular weight in terms of polystyrene of the hydrogenated resin is more preferably ≤ 1,570 g/mol, even more preferably ≤ 1,530 g/mol, still even more preferably ≥ 1,500 g/mol, yet still even more preferably ≤ 1,470 g/mol, yet still even more preferably ≤ 1,430 g/mol, yet still even more preferably ≤ 1,400 g/mol, yet still even more preferably ≤ 1,370 g/mol, yet still even more preferably ≤ 1,330 g/mol, yet still even more preferably ≤ 1,300 g/mol, yet still even more preferably ≤ 1,200 g/mol, yet still even more preferably ≤ 1,100 g/mol, yet still even more preferably ≤ 1,000 g/mol, and particularly preferably ≤ 950 g/mol in terms of improving compatibility of the hydrogenated resin with the rubber component and thus enhancing the effect caused by the hydrogenated resin.

A ratio (Ts_{HR}/Mw_{HR}) of the softening point of the hydrogenated resin (Ts_{HR}, the unit: °C) with respect to the weight average molecular weight in terms of polystyrene of the hydrogenated resin (Mw_{HR}, the unit: g/mol) is preferably ≥ 0.07, more preferably ≥ 0.083, even more preferably ≥ 0.095, still even more preferably ≥ 0.104, and particularly preferably ≥ 0.14. The ratio (Ts_{HR}/Mw_{HR}) is preferably ≤ 0.19, more preferably ≤ 0.18, and even more preferably ≤ 0.17.

The softening point and the weight average molecular weight in terms of polystyrene of the hydrogenated resin can be determined by the methods described in Examples discussed below.

A "hydrogenated resin" represents a resin obtained by hydrogenating reduction of a resin in the present disclosure.

Examples of the resin as a raw material of a hydrogenated resin include C₅ resin, C₅₋C₉ resin, C₉ resin, terpene resin, dicyclopentadiene resin, terpene-aromatic compound-based resin, and the like. Either a single type or combination of two or more types of those examples may be used as the resin as a raw material of a hydrogenated resin.

Examples of the C₅ resin include aliphatic petroleum resin obtained by (co)polymerizing the C₅ fractions derived from thermal decomposition of naphtha available in the petrochemical industry.

Examples of the C₅ fractions generally include: olefin hydrocarbons such as 1-pentene, 2-pentene, 2-methyl-1-butene, 2-methyl-2-butene, 3-methyl-1-butene; diolefin hydrocarbons such as 2-methyl-1,3-butadiene, 1,2-pentadiene, 1,3-pentadiene, 3-methyl-1,2-butadiene; and the like. Commercially available products can be used as the C₅ resin.

The C₅₋C₉ resin represents C₅₋C₉ synthetic petroleum resin and examples thereof include a solid polymer obtained by polymerizing petroleum-derived C₅₋C₁₁ fractions by using a Friedel-Crafts catalyst such as AlCl₃, BF₃, or the like. Specific examples of the C₅₋C₉ resin include copolymers containing styrene, vinyltoluene, α-methylstyrene, indene, or the like as a main component.

A resin having a relatively low content of C_{≥9} components is preferable as the C₅₋C₉ resin in terms of obtaining good compatibility with the rubber component. In the present disclosure, a "relatively low content of C_{≥9} components" indicates that a content of C_{≥9} components in the resin in entirety thereof is < 50 mass %, preferably ≤ 40 mass %. Commercially available products can be used as the C₅₋C₉ resin.

The C₉ resin represents a C₉ synthetic petroleum resin and examples thereof include a solid polymer obtained by polymerizing C₉ fractions by using a Friedel-Crafts catalyst such as AlCl₃, BF₃, or the like.

Examples of the C₉ resin include copolymers containing indene, α-methylstyrene, vinyltoluene, or the like as a main component.

The terpene resin is a solid resin manufactured by: preparing turpentine oil obtained simultaneously with rosin from a tree in the genus Pinus, or a polymer component separated from turpentine oil; and polymerizing the turpentine oil/the polymer component by using a Friedel-Crafts catalyst. Examples of the terpene resin include β-pinene resin, α-pinene resin, and the like. Representative examples of the terpene-aromatic compound-based resin include terpene-phenol resin. The terpene-phenol resin can be obtained by, for example, a method of causing a terpene and any of various phenols to react with each other by using a Friedel-Crafts catalyst and then optionally subjecting the reaction product to condensation by using formalin. The terpene as a raw material, of which type is not particularly restricted, is preferably a monoterpene hydrocarbon such as α-pinene, limonene or the like, more preferably a monoterpene hydrocarbon containing α-pinene, and particularly preferably α-pinene. The terpene resin may have styrene or the like in a skeleton thereof.

The dicyclopentadiene resin represents, for example, a resin obtained by polymerizing dicyclopentadiene by using a Friedel-Crafts catalyst such as AlCl₃, BF₃, or the like.

A resin as a raw material of the hydrogenated resin may include, for example, a resin (a C₅ -DCPD resin) obtained by copolymerizing C₅ fractions and dicyclopentadiene (DCPD).

In this respect, a C₅ -DCPD resin containing a dicyclopentadiene-derived component by 50 mass % or more with respect to the total amount thereof is regarded as a dicyclopentadiene resin. A C₅ -DCPD resin containing a dicyclopentadiene-derived component by less than 50 mass % with respect to the total amount thereof is regarded as a C₅ resin. The same applies to a case where the C₅ -DCPD resin further includes a third component (other than C₅ fractions and DCPD) by a small amount.

The hydrogenated resin is: preferably at least one selected from the group consisting of hydrogenated C₅ resin, hydrogenated C₅₋C₉ resin, hydrogenated dicyclopentadiene resin (hydrogenated DCPD resin), and hydrogenated terpene resin; more preferably at least one selected from the group consisting of hydrogenated C₅ resin and hydrogenated C₅₋C₉ resin; and even more preferably hydrogenated C₅ resin, in terms of enhancing compatibility of the hydrogenated resin with the rubber component and further improving wet performance of a tire having the rubber composition applied thereto. Further, the hydrogenated resin is preferably a resin of which monomer has a hydrogenated DCPD structure or a hydrogenated ring structure.

### -- Other resins --

The rubber composition may further contain a resin other than the hydrogenated resin therein. In a case where the rubber composition further contains a resin other than the hydrogenated resin, a content ratio of the hydrogenated resin with respect to the total amount of the hydrogenated resin and a resin other than the hydrogenated resin, i.e., the total amount of the resins, is preferably ≥ 40 mass %, more preferably ≥ 50 mass %, even more preferably ≥ 55 mass %, particularly preferably ≥ 60 mass %, and may be 100 mass % (i.e., the resin may be entirely composed of the hydrogenated resin), in terms of optimizing the balance between the softening point and the molecular weight of the resins as a whole.

The resin other than the hydrogenated resin is: preferably at least one selected from the group consisting of C₅ resin, C₉ resin, C₅₋C₉ resin, terpene resin, terpene-aromatic compound-based resin, rosin-based resin, dicyclopentadiene resin, and alkylphenol resin; and particularly preferably a resin selected from C₉ resin and C₅₋C₉ resin, in terms of further improving wet performance of a tire.

### (Silane coupling agent)

It is preferable that the rubber composition of the present disclosure further contains a silane coupling agent represented by general formula (1) shown below.

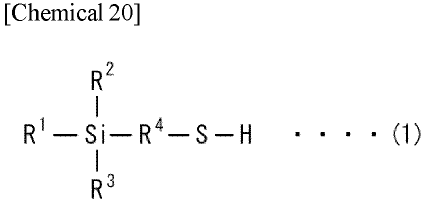

Dispersibility of a filler such as silica can be significantly improved by inclusion of the silane coupling agent represented by the general formula (1) in the rubber composition, due to a synergetic effect caused by the high-Tg modified SBR, the low-Tg modified SBR, and the silane coupling agent, whereby hysteresis loss (tanδ) of the rubber composition in the temperature region during normal running is further reduced and thus the low loss (rolling resistance) property and the wet performance of a tire having the rubber composition applied thereto are improved with even better balance therebetween than otherwise.

In the general formula (1), each of R¹, R² and R³ independently represents - O-CⱼH₂ⱼ₊₁, -(O-CₖH₂ₖ-)ₐ-O-CₘH₂ₘ₊₁, or -CₙH₂ₙ₊₁, wherein each of "j", "m" and "n" independently represents an integer in the range of 0 to 12 and each of "k" and "a" independently represents an integer in the range of 1 to 12.

Further, in the general formula (1), R⁴ represents a C₁₋₁₂ normal, branched or cyclic saturated/unsaturated alkylene, cycloalkylene, cycloalkylalkylene, cycloalkenylalkylene, alkenylene, cycloalkenylene, cycloalkylalkenylene, cycloalkenylalkenylene, arylene, or aralkylene group.

Yet further, in the general formula (1), at least one of R¹, R² and R³ is preferably -O-CⱼH₂ⱼ₊₁.

Examples of the compound represented by the general formula (1) include (3-mercaptopropyl)trimethoxysilane, (3-mercaptopropyl)triethoxysilane, (3-mercaptopropyl)methyldimethoxysilane, (mercaptomethyl)dimethylethoxysilane, (mercaptomethyl)trimethoxysilane, ethoxy(3-mercaptopropyl)bis[(3,6,9,12,15-pentaoxaoctacosane-1-yl)oxy]silane {product name "Si363" [C₁₃H₂₇O(CH₂CH₂O)₅]₂(CH₃CH₂O)Si(CH₂)₃SH, manufactured by Evonik Degussa GmbH}, and the like. Among those examples, ethoxy(3-mercaptopropyl)bis[(3,6,9,12,15-pentaoxaoctacosane-1-yl)oxy]silane is preferable in terms of realizing excellent low loss property of the rubber composition.

Either a single type or combination of two or more types of those examples may be used as the silane coupling agent.

A content of the silane coupling agent, which is not particularly restricted, may be in the range of 1 parts by mass to 20 parts by mass with respect to 100 parts by mass of the silica (or with respect to 100 parts by mass of the filler in entirety thereof in a case where the filler contains no silica). The silane coupling agent can satisfactorily cause an effect thereof as a coupling agent when a content thereof is ≥ 1 parts by mass with respect to 100 parts by mass of the silica. The rubber component can be prevented from gelling when a content of the silane coupling agent is ≤ 20 parts by mass with respect to 100 parts by mass of the silica. A content of the silane coupling agent is preferably in the range of 5 parts by mass to 15 parts by mass with respect to 100 parts by mass of the silica from the same point of view.

### (Guanidine)

It is preferable that the rubber composition of the present disclosure further contains guanidine. Examples of the guanidine include 1,3-diphenylguanidine (DPG), 1,3-di-o-tolylguanidine, 1-o-tolylbiguanide, di-o-tolylguanidine salt of dicatechol borate, 1,3-di-o-cumenylguanidine, 1,3-di-o-diphenylguanidine, 1,3-di-o-cumenyl-2-propionylguanidine, and the like. Diphenylguanidine (DPG) is preferable among those examples. Either a single type or combination of two or more types of those examples may be used as the guanidine.

Guanidine added in a first mixing and kneading process of mixing and kneading the rubber component, the filler, and the resin decreases viscosity (viscosity in the unvulcanized state) of the rubber composition, thereby improving workability in mixing and kneading thereof, as described below.

A content of the guanidine in the rubber composition is preferably in the range of 0.1 to 5 parts by mass and more preferably in the range of 1 to 3 parts by mass with respect to 100 parts by mass of the rubber component.

### (Vulcanizing agent)

It is preferable that the rubber composition of the present disclosure further contains a vulcanizing agent. Examples of the vulcanizing agent include sulfur.

A content of the vulcanizing agent, which is calculated as a sulfur content, is preferably in the range of 0.1 to 10 parts by mass and more preferably in the range of 1 to 4 parts by mass with respect to 100 parts by mass of the rubber component.

### (Other components)

In addition to the rubber component, the filler, the resin, the silane coupling agent, the guanidine, and the vulcanizing agent described above, other various components generally employed in the rubber industry, such as softening agent, processing aid, stearic acid, antioxidant, zinc white, vulcanization accelerator, and the like, may be optionally selected and added to the rubber composition according to necessity unless the addition thereof adversely affects the objects of the present disclosure.

### (Method for manufacturing rubber composition)

A method for manufacturing the rubber composition is not particularly restricted. For example, the rubber composition can be manufactured by: blending, mixing and kneading the aforementioned rubber component, the filler, the resin, and various other components optionally selected according to necessity; and subjecting the mixture thus mixed and kneaded, to warming, extrusion, and the like.

Further, a vulcanized rubber can be obtained by vulcanizing the rubber composition thus obtained.

Conditions during the mixing and kneading process are not particularly restricted. Various relevant conditions such as a volume of a raw material to be charged into a kneader, rotational speed of a rotor, ram pressure, temperature and time period in the mixing and kneading process, type of a kneader, and the like can be optionally selected according to the purpose. Examples of the kneader include Banbury mixer, intermix machine, kneader, rolls, and the like, which are generally employed for mixing and kneading of a rubber composition.

Conditions of warming are not particularly restricted, either. Various relevant conditions such as temperature and time period in the warming process, type of a warming device, and the like can be optionally selected according to the purpose. Examples of the warming device include warming rolls and like, which are generally employed for warming of a rubber composition.

Conditions of extrusion are not particularly restricted, either. Various relevant conditions such as extrusion time, extrusion speed, type of an extruder, temperature in the extrusion process, and the like can be optionally selected according to the purpose. Examples of the extruder include an extruder or the like, which is generally employed for extrusion of a rubber composition. The temperature in the extrusion process may be optionally set as required.

Details of a device, a method, conditions, and the like for vulcanization are not particularly restricted and may be optionally decided/selected according to the purpose. Examples of a vulcanizing device include a vulcanizing molding machine provided with a die, which is generally employed for vulcanization of a rubber composition. Temperature, as a condition during the vulcanization process, is, for example, in the range of 100 °C to 190 °C.

In a case where the rubber composition of the present disclosure contains guanidine and a vulcanizing agent therein, the rubber composition is manufactured preferably by (1) a first mixing and kneading process of mixing and kneading the rubber component, the filler, the resin, and the guanidine; and (2) a second mixing and kneading process of mixing and kneading a mixture obtained by the first mixing and kneading process and the vulcanizing agent. A method for manufacturing a rubber composition of the present disclosure, which is a method for manufacturing the rubber composition described above, includes: (1) a first mixing and kneading process of mixing and kneading the rubber component, the filler, the resin, and the guanidine; and (2) a second mixing and kneading process of mixing and kneading a mixture obtained by the first mixing and kneading process and the vulcanizing agent. Guanidine, added to and mixed and kneaded with the rubber component, the filler, and the resin in the first mixing and kneading process, decreases viscosity (viscosity in the unvulcanized state) of the rubber composition and thus improves workability in mixing and kneading, of the rubber composition.

Examples of the guanidine include 1,3-diphenylguanidine (DPG), 1,3-di-o-tolylguanidine, 1-o-tolylbiguanide, di-o-tolylguanidine salt of dicatechol borate, 1,3-di-o-cumenylguanidine, 1,3-di-o-diphenylguanidine, 1,3-di-o-cumenyl-2-propionylguanidine, and the like. Either a single type or combination of two or more types of those examples may be used as the guanidine.

1,3-diphenylguanidine is preferable as the guanidine among the examples thereof described above. 1,3-diphenylguanidine (DPG), added to and mixed and kneaded with the rubber component, the filler, and the resin in the first mixing and kneading process, decreases viscosity (viscosity in the unvulcanized state) of the rubber composition, thereby further improving workability in mixing and kneading thereof.

An amount of the guanidine to be blended in the first mixing and kneading process, is preferably in the range of 0.1 to 5 parts by mass and more preferably in the range of 1 to 3 parts by mass with respect to 100 parts by mass of the rubber component. The guanidine functions as a vulcanization accelerator. Accordingly, for example, in a case where a rubber composition as a final product is to contain a vulcanization accelerator, it is possible to reduce, by blending guanidine with other components in the first mixing and kneading process, an amount of a vulcanization accelerator to be blended in a subsequent mixing and kneading process, e.g., the second mixing and kneading process.

### (Application of rubber composition)

The rubber composition of the present embodiment is applicable to various rubber articles including a tire. The rubber composition of the present disclosure is particularly preferable as a rubber composition for a tire.

### < Tire >

A tire of the present disclosure characteristically has tread rubber made of the rubber composition described above. The tire of the present disclosure is excellent in wet performance and exhibits low rolling resistance.

The tire of the present disclosure is preferably a pneumatic tire.

The tire described above may be manufactured, depending on type and structural members of the tire as intended, by either i) molding the rubber composition in an unvulcanized state and subjecting a resulting green tire to vulcanization or ii) subjecting the rubber composition in an unvulcanized state to a preliminary vulcanization process, to obtain a half-vulcanized rubber, then molding the resulting half-vulcanized rubber, and subjecting a resulting tire to a main vulcanization process. In a case where the tire of the present disclosure is a pneumatic tire, examples of gas with which the pneumatic tire is to be inflated include inert gas such as nitrogen, argon, helium or the like, as well as ambient air and air of which oxygen partial pressure has been adjusted.

### EXAMPLES

The present disclosure will be described further in detail by Examples hereinafter. The present disclosure is not limited by any means to these Examples.

### < Method for analyzing modified SBR >

The glass transition temperature (Tg), a bound styrene content, and a microstructure of the butadiene portion, of a modified SBR, are determined by the methods described below, respectively.

### (1) Glass transition temperature (Tg)

The glass transition temperature (Tg) of a modified SBR is/was determined by: first synthesizing the modified SBR and preparing a sample thereof; recording a DSC curve of the sample by using "DSC250" manufactured by TA Instruments, with increasing the temperature of the sample from -100 °C at a rate of 20 °C/minute in a helium gas circulation system (50 mL/minute); and regarding the inflection point of the DSC differential curve as the glass transition temperature of the modified SBR.

### (2) Bound styrene content

A bound styrene content of a modified SBR is determined by: first synthesizing the modified SBR and preparing a sample thereof; preparing a measurement sample by diluting 100 mg of the sample with chloroform to the volume of 100 mL and dissolving the sample in the chloroform; measuring absorbance at the UV absorption wavelength (in the vicinity of 254 nm) due to the phenyl group of styrene; and determining, based on the absorbance thus measured, a bound styrene content (mass %) with respect to the entire sample (100 mass %). A spectrophotometer "UV-2450" manufactured by SHIMADZU CORPORATION is employed as a measuring device.

### (3) Microstructure

A microstructure of the butadiene portion of a modified SBR thus synthesized is determined from integration ratios of ¹H-NMR spectrum (1,2-vinyl bond content) and¹³C-NMR spectrum (a ratio of the cis-1,4 bond content and the trans-1,4 bond content).

### < Method for analyzing hydrogenated resin >

The softening point and the weight average molecular weight of a hydrogenated resin are determined by the methods described below, respectively.

### (4) Softening point

The softening point of a hydrogenated resin is determined according to JIS-K2207-1996 (the ring and ball (softening point) method).

### (5) Weight average molecular weight

The average molecular weight of a hydrogenated resin is measured by gel permeation chromatography (GPC) under the conditions described below and then the weight average molecular weight in terms of polystyrene, of the hydrogenated resin, is calculated based on the average molecular weight.

| | | |
|---|---|---|
| ● | Column temperature: | 40 °C |
| ● | Amount of injection: | 50 µL |
| ● | Carrier and flow rate: | Tetrahydrofuran, 0.6 mL/min. |
| ● | Sample preparation: | 2.5 g of hydrogenated resin is dissolved in 10 mL of tetrahydrofuran |

### < Preparation of rubber composition >

Rubber composition samples of Examples and Comparative Examples were prepared according to the blend formulations shown in Table 1 by carrying out the first mixing and kneading process and the second mixing and kneading process in this order, with a conventional Banbury mixer. The mixture was collected from the Banbury mixer after completion of the first mixing and kneading process and then the mixture was charged into the Banbury mixer and subjected to the second mixing and kneading process. The maximum temperature of the mixture in the first mixing and kneading process was set at 145 °C and the maximum temperature of the rubber composition in the second mixing and kneading process was set at 105 °C.

### < Evaluation of rubber composition >

Wet performance, rolling resistance performance, reinforcement property, and workability were evaluated for each of the rubber composition samples thus prepared, by the respective methods described below.

### (6) Wet performance

Wet performance resulting from the rubber composition sample was evaluated by: obtaining a vulcanized rubber sample by vulcanizing the rubber composition sample; measuring the loss tangent (tanδ) of the vulcanized rubber sample by a rheometer, after applying the initial strains to the sample, under the conditions of temperature: -5 °C, dynamic strain: 1 %, frequency: 15 Hz; and indicating the tanδ thus measured, by an index value relative to the tanδ of Comp. Example 1 being "100". The larger index value represents the larger tanδ and thus the better wet performance when the rubber composition is applied to a tire.

### (7) Rolling resistance performance

Rolling resistance performance resulting from the rubber composition sample was evaluated by: obtaining a vulcanized rubber sample by vulcanizing the rubber composition sample; measuring the loss tangent (tanδ) of the vulcanized rubber sample by a rheometer, after applying the initial strains to the sample, under the conditions of temperature: 50 °C, dynamic strain: 1 %, frequency: 15 Hz; calculating the inverse number of the tanδ thus measured; and indicating the inverse number by an index value relative to the inverse number of the tanδ of Comp. Example 1 being "100". The larger index value represents the smaller tanδ and thus the lower rolling resistance when the rubber composition is applied to a tire.

### (8) Reinforcement property

Reinforcement property resulting from the rubber composition sample was evaluated by: obtaining a vulcanized rubber sample by vulcanizing the rubber composition sample; subjecting the vulcanized rubber sample to a tensile test at 100 °C according to JIS K 6251, thereby measuring EB (elongation at break (%)) and TB (tensile strength at break (MPa)) to determine TF (toughness: EB × TB); indicating the TF (toughness) by an index value relative to the TF (toughness) of Comp. Example 1 being "100". The larger index value represents the higher TF (toughness) and thus the better reinforcement property of the vulcanized rubber sample.

### (9) Workability

Workability related to the rubber composition sample was evaluated by: measuring Mooney viscosity ML₁₊₄ (130 °C) according to JIS K 6300; calculating the inverse number of the Mooney viscosity thus measured; and indicating the inverse number by an index value relative to the inverse number of the Mooney viscosity of Comp. Example 1 being "100". The larger index value represents the lower Mooney viscosity and thus the better workability of the rubber composition sample.

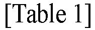

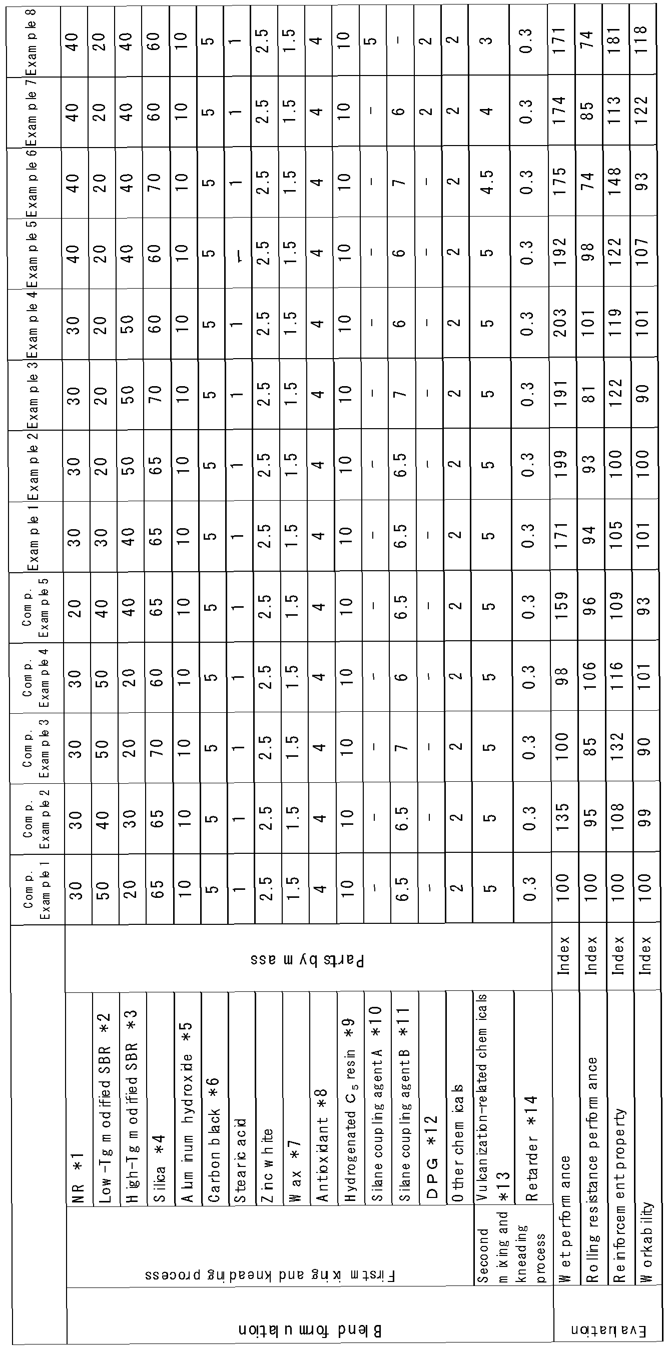

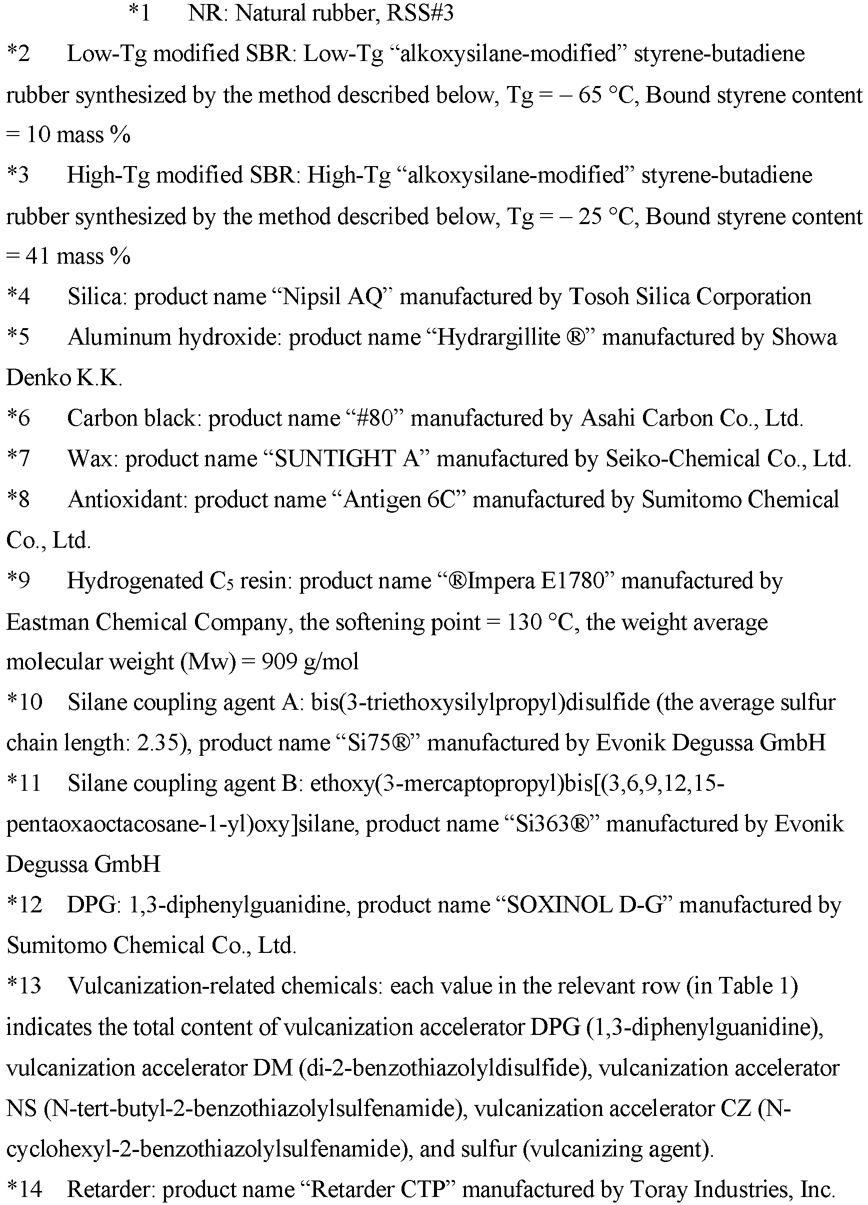

### < Method for synthesizing Low-Tg modified SBR (*2) >

A modified SBR having one modified end was obtained by:
charging a cyclohexane solution of 1,3-butadiene and a cyclohexane solution of styrene into a dry, nitrogen-substituted pressure-resistant glass vessel having inner volume: 800 mL, such that 67.5 g of 1,3-butadiene and 7.5 g of styrene were present therein;
adding 0.09 mmol of 2,2-ditetrahydrofurylpropane and 0.7 mmol of n-butyllithium to the mixture and carrying out polymerization at 50 °C for 1.5 hours;
adding, when the polymerization conversion ratio in the polymerization reaction system reached substantially 100 %, 0.63 mmol of N,N-bis(trimethylsilyl)-3-[diethoxy(methyl)silyl]propylamine as a modifying agent to the system and carrying out a modification reaction at 50 °C for 30 minutes;
then adding 2 mL of an isopropanol solution of 2,6-di-t-butyl-p-cresol (BHT) (BHT concentration: 5 mass %) to the reaction solution to stop the reaction; and
drying a resulting substance by the conventional method, thereby obtaining a one end-modified SBR.

The one-end modified SBR thus obtained had the glass transition temperature (Tg) of -65 °C and a bound styrene content of 10 mass %.

### < Method for synthesizing High-Tg modified SBR (*3) >

### (i) Preparation of modification initiator

A modification initiator is obtained by:
preparing two vacuum dried 4L pressure vessels made of stainless steel;
charging 944 g of cyclohexane, 161 g of a compound represented by the structural formula (3-1) shown below, and 86 g of tetramethylethylenediamine into the first pressure vessel, thereby manufacturing a first reaction solution;
charging, simultaneously with manufacturing the first reaction solution, 318 g of n-butyllithium (20 mass %) in the liquid phase and 874 g of cyclohexane into the second pressure vessel, thereby manufacturing a second reaction solution, wherein the mole ratio of the compound represented by the structural formula (3-1), n-butyllithium, and tetramethylethylenediamine is 1: 1: 1;
injecting the first reaction solution at an injection rate of 1.0 g/min. and the second reaction solution at an injection rate of 1.0 g/min. into a first continuous channel and a second continuous channel of a continuous reactor, respectively, by using mass flowmeters in a state where pressure of each of the pressure vessels is maintained at 7 bar;
maintaining, during the injection operations, the temperature in the continuous reactor at -10 °C and the internal pressure of the continuous reactor at 3 bar by using a back pressure regulator, with controlling time during which the reactants stay in the continuous reactor to be 10 minutes or less; and
collecting a modification initiator by terminating the reaction.

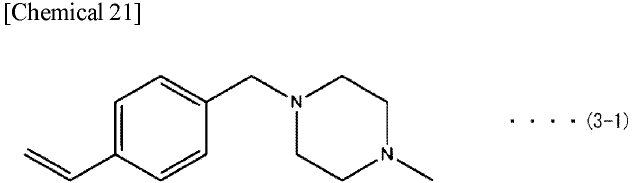

### (ii) Polymerization process

A modified SBR of which both ends have been modified is obtained by:
injecting, into a first reactor of a continuous reactor system in which three reactors are connected in series, i) a styrene solution containing styrene (60 mass %) dissolved in n-hexane at an injection rate of 7.99 kg/h, ii) a 1,3-butadiene solution containing 1,3-butadiene (60 mass %) dissolved in n-hexane at an injection rate of 10.55 kg/h, iii) n-hexane at an injection rate of 47.66 kg/h, iv) a 1,2-butadiene solution containing 1,2-butadiene (2.0 mass %) dissolved in n-hexane at an injection rate of 10 g/h, v) a solution as a polar additive containing 2,2-di(2-tetrahydrofuryl)propane (10 mass %) dissolved in n-hexane at an injection rate of 10.0 g/h, and vi) the modification initiator prepared by the production example described above at an injection rate of 292.50 g/h, with maintaining the temperature of the first reactor at 50 °C during the injection operations;
transferring a resulting polymer from the first reactor to a second reactor through transfer piping when a polymerization conversion rate has reached 43 %;
then injecting, into a second reactor, a 1,3-butadiene solution containing 1,3-butadiene (60 mass %) dissolved in n-hexane at an injection rate of 0.95 kg/h, with maintaining the temperature of the second reactor at 65 °C during the injection operation;
transferring a resulting polymer from the second reactor to a third reactor through transfer piping when a polymerization conversion rate has reached 95 % or higher;
adding a solution of a compound (dissolved therein) as a modifying agent represented by the structural formula (2-1) shown below, to (the polymer in) the third reactor (the modifying agent: active Li = 1 : 1 mol), with maintaining the temperature of the third reactor at 65 °C; 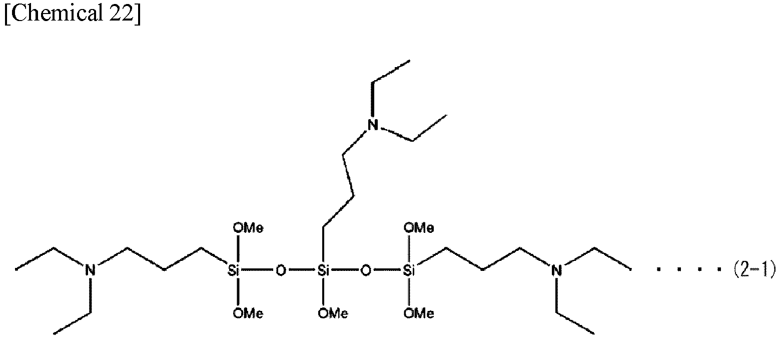
then injecting, into a polymer solution discharged from the third reactor, a solution containing "IR1520" (30 mass %) manufactured by BASF SE dissolved therein as antioxidant at an injection rate of 170 g/h, with stirring; and
stirring a resulting polymer in warm water heated by steam, to remove the solvents, thereby obtaining a both-ends modified SBR.

The both-ends modified SBR thus obtained had the glass transition temperature (Tg) of -25 °C, a bound styrene content of 41 mass %, a vinyl bond content of the butadiene portion thereof of 45 %, the weight average molecular weight (Mw) of 440,000, and the molecular weight distribution (Mw/Mn) of 1.6.

It is understood from Table 1 that the rubber composition of Examples according to the present disclosure can be excellent in both wet performance and low rolling resistance performance in a compatible manner.

Specifically, it is understood from comparisons of: (1) Comparative Examples 1 and 2 vs. Examples 1 and 2; (2) Comparative Example 3 vs. Example 3; and (3) Comparative Example 4 vs. Example 4, wherein in each of (1) to (3) the former Comp. Example(s) and the latter Example(s) differ from each other only in a mass ratio of the high-Tg modified SBR content with respect to the low-Tg modified SBR content, that wet performance can be significantly improved, while satisfactory low rolling resistance performance is maintained, by setting a mass ratio of the high-Tg modified SBR content/the low-Tg modified SBR content to be 1 or larger.

### INDUSTRIAL APPLICABILITY

The rubber composition of the present disclosure is applicable to various types of rubber articles including a tire.

## Claims

1. A rubber composition, comprising a rubber component, a filler, and a resin,
wherein:
the rubber component contains natural rubber, a high-Tg modified styrene-butadiene rubber, and a low-Tg modified styrene-butadiene rubber having a lower glass transition temperature (Tg) than the high-Tg modified styrene-butadiene rubber;
one end of the high-Tg modified styrene-butadiene rubber has been modified with a modifying agent containing the compound represented by general formula (3) and the other end of the high-Tg modified styrene-butadiene rubber has been modified with an alkoxysilane;
one end of the low-Tg modified styrene-butadiene rubber has been modified with an alkoxysilane; and
a mass ratio of the high-Tg modified styrene-butadiene rubber (high-Tg modified SBR) content with respect to the low-Tg modified styrene-butadiene rubber (low-Tg modified SBR) content, i.e., high-Tg modified SBR content/low-Tg modified SBR content, is larger than 1, 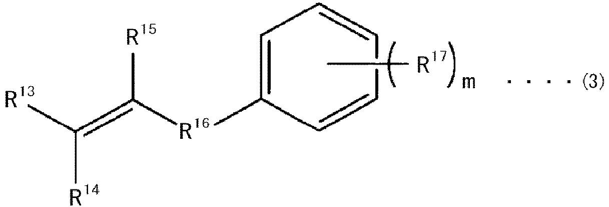
wherein, in general formula (3), each of R¹³ to R¹⁵ independently represents: hydrogen; a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; or a C₃₋₃₀ heterocyclic group;
R¹⁶ represents: single bond; a C₁₋₂₀ alkylene group substituted/unsubstituted with a substituent group; a C₅₋₂₀ cycloalkylene group substituted/unsubstituted with a substituent group; or a C₅₍₆₎₋₂₀ arylene group substituted/unsubstituted with a substituent group. In this respect, the substituent group is a C₁₋₁₀ alkyl group, a C₅₋₁₀ cycloalkyl group, or a C₆₋₂₀ aryl group; and
R¹⁷ represents: a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; a C₃₋₃₀ heterocyclic group; "m" represents an integer in the range of 1 to 5, and a plurality of R¹⁷s may be of either the same type or different types when m is an integer in the range of 2 to 5.

2. The rubber composition of claim 1, further comprising a silane coupling agent represented by general formula (1) shown below, 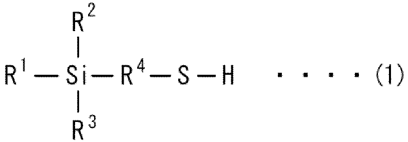 in the general formula (1), each of R¹, R² and R³ independently represents -O-CⱼH₂ⱼ₊₁, - (O-CₖH₂ₖ-)ₐ-O-CₘH₂ₘ₊₁, or -CₙH₂ₙ₊₁, wherein: each of "j", "m" and "n" independently represents an integer in the range of 0 to 12 and each of "k" and "a" independently represents an integer in the range of 1 to 12; R⁴ represents a C₁₋₁₂ normal, branched or cyclic saturated/unsaturated alkylene, cycloalkylene, cycloalkylalkylene, cycloalkenylalkylene, alkenylene, cycloalkenylene, cycloalkylalkenylene, cycloalkenylalkenylene, arylene, or aralkylene group.

3. The rubber composition of claim 1 or 2, further comprising a guanidine and a vulcanizing agent.

4. A method for manufacturing the rubber composition of claim 3, wherein the method comprising:
a first mixing and kneading process of mixing and kneading the rubber component, the filler, the resin, and the guanidine; and
a second mixing and kneading process of mixing and kneading a mixture obtained by the first mixing and kneading process and the vulcanizing agent.

5. The rubber composition of claim 3, wherein the guanidine is 1,3-diphenylguanidine, i.e., DPG.

6. The rubber composition of any of claims 1 to 3 and 5, wherein the resin includes a hydrogenated resin having the softening point higher than 110 °C and the weight average molecular weight in terms of polystyrene in the range of 200 g/mol to 1,600 g/mol,
wherein the softening point of the hydrogenated resin is determined according to JIS-K2207-1996 based on the ring and ball method.

7. The rubber composition of claim 6, wherein the hydrogenated resin is at least one selected from the group consisting of hydrogenated C₅ resin, hydrogenated C₅₋C₉ resin, and hydrogenated dicyclopentadiene resin.

8. The rubber composition of any of claims 1 to 3 and 5 to 7, wherein a content of the resin is in the range of 2 to 15 parts by mass with respect to 100 parts by mass of the rubber component.

9. A tire, having tread rubber formed by the rubber composition of any of claims 1 to 3 and 5 to 8.

10. The rubber composition of claim 1, wherein, in general formula (3), at least one of R¹⁷(s) is a functional group represented by the general formula (3a) or the general formula (3b) shown below, 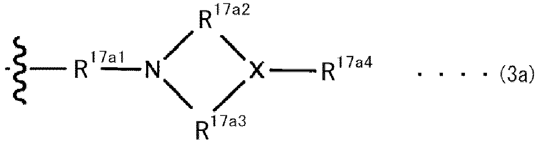
in the general formula (3a), R^{17a1} represents: a C₁₋₂₀ alkylene group substituted/unsubstituted with a substituent group; a C₅₋₂₀ cycloalkylene group substituted/unsubstituted with a substituent group; or a C₆₋₂₀ arylene group substituted/unsubstituted with a substituent group,
the substituent group is a C₁₋₁₀ alkyl group, a C₅₋₁₀ cycloalkyl group, or a C₆₋₂₀ aryl group,
each of R^{17a2} and R^{17a3} independently represents a C₁₋₁₀ alkyl; a C₅₋₁₀ cycloalkyl group; or a C₁₋₂₀ alkylene group unsubstituted/substituted with a C₆₋₂₀ aryl group, and
R^{17a4} represents: hydrogen; a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; or a C₃₋₃₀ heterocyclic group. "X" represents N, O or S atom, wherein R^{17a4} does not exist when X is O or S, 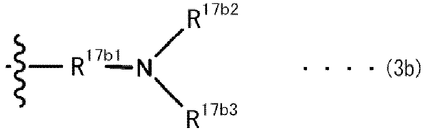
in the general formula (3b), R^{17b1} represents: a C₁₋₂₀ alkylene group substituted/unsubstituted with a substituent group; a C₅₋₂₀ cycloalkylene group substituted/unsubstituted with a substituent group; or a C₆₋₂₀ arylene group substituted/unsubstituted with a substituent group,
the substituent group is a C₁₋₁₀ alkyl group, a C₅₋₁₀ cycloalkyl group, or a C₆₋₂₀ aryl group, and
each of R^{17b2} and R^{17b3} independently represents: a C₁₋₃₀ alkyl group; a C₂₋₃₀ alkenyl group; a C₂₋₃₀ alkynyl group; a C₁₋₃₀ heteroalkyl group; a C₂₋₃₀ heteroalkenyl group; a C₂₋₃₀ heteroalkynyl group; a C₅₋₃₀ cycloalkyl group; a C₆₋₃₀ aryl group; or a C₃₋₃₀ heterocyclic group.

## Patentansprüche

1. Gummimischung, umfassend eine Kautschukkomponente, einen Füllstoff und ein Harz,
wobei:
die Kautschukkomponente Naturkautschuk, einen Hoch-Tg-modifizierten Styrol-Butadien-Kautschuk und einen Nieder-Tg-modifizierten Styrol-Butadien-Kautschuk, der eine niedrigere Glasübergangstemperatur (Tg) als der Hoch-Tgmodifizierte Styrol-Butadien-Kautschuk aufweist, enthält;
ein Ende des Hoch-Tg-modifizierten Styrol-Butadien-Kautschuks mit einem Modifizierungsmittel modifiziert wurde, das die durch allgemeine Formel (3) dargestellte Verbindung enthält, und das andere Ende des Hoch-Tg-modifizierten Styrol-Butadien-Kautschuks mit einem Alkoxysilan modifiziert wurde;
ein Ende des Nieder-Tg-modifizierten Styrol-Butadien-Kautschuks mit einem Alkoxysilan modifiziert wurde; und
ein Massenverhältnis des Gehalts an Hoch-Tg-modifizierten Styrol-Butadien-Kautschuk (Hoch-Tg-modifizierter SBR) in Bezug auf den Gehalt an Nieder-Tgmodifiziertem Styrol-Butadien-Kautschuk (Nieder-Tg-modifizierter SBR), d. h. Hoch-Tg-modifizierter SBR -Gehalt/Nieder-Tg-modifizierter SBR-Gehalt, größer als 1 ist, 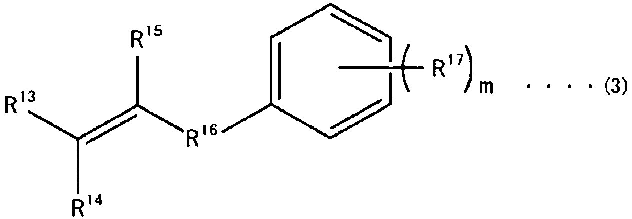
wobei in der allgemeinen Formel (3) jedes von R¹³ bis R¹⁵ unabhängig voneinander Folgendes darstellt: Wasserstoff; eine C₁₋₃₀-Alkylgruppe; eine C₂₋₃₀-Alkenylgruppe; eine C₂₋₃₀-Alkinylgruppe; eine C₁₋₃₀-Heteroalkylgruppe; eine C₂₋₃₀-Heteroalkenylgruppe; eine C₂₋₃₀-Heteroalkinylgruppe; eine C₅₋₃₀-Cycloalkylgruppe; eine C₆₋₃₀-Arylgruppe; oder eine heterocyclische C₃₋₃₀-Gruppe;
R¹⁶ Folgendes darstellt: Einfachbindung; eine C₁₋₂₀-Alkylengruppe, substituiert/unsubstituiert mit einer Substituentengruppe; eine C₅₋₂₀-Cycloalkylengruppe, substituiert/unsubstituiert mit einer Substituentengruppe; oder eine C₅₍₆₎₋₂₀-Arylengruppe, substituiert/unsubstituiert mit einer Substituentengruppe, In diesem Zusammenhang ist die Substituentengruppe eine C₁₋₁₀-Alkylgruppe, eine C₅₋₁₀-Cycloalkylgruppe oder eine C₆₋₂₀-Arylgruppe; und
R¹⁷ Folgendes darstellt: eine C₁₋₃₀-Alkylgruppe; eine C₂₋₃₀-Alkenylgruppe; eine C₂₋₃₀-Alkinylgruppe; eine C₁₋₃₀-Heteroalkylgruppe; eine C₂₋₃₀-Heteroalkenylgruppe; eine C₂₋₃₀-Heteroalkinylgruppe; eine C₅₋₃₀-Cycloalkylgruppe; eine C₆₋₃₀-Arylgruppe; eine heterocyclische C₃₋₃₀-Gruppe; "m" eine ganze Zahl im Bereich von 1 bis 5 darstellt, und eine Vielzahl von R¹⁷ entweder vom gleichen Typ oder von verschiedenen Typen sein können, wenn m eine ganze Zahl im Bereich von 2 bis 5 ist.

2. Kautschukzusammensetzung nach Anspruch 1, ferner umfassend einen Silan-Haftvermittler, dargestellt durch folgende allgemeine Formel (1), 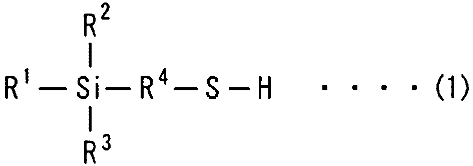 wobei in der allgemeinen Formel (1) jedes von R¹, R² und R³ unabhängig voneinander -O-CⱼH₂ⱼ₊₁, -(O-CₖH₂ₖ₋)ₐ-O-CₘH₂ₘ₊₁ oder -CₙH₂ₙ₊₁ darstellt, wobei: "j", "m" und "n" jeweils unabhängig voneinander eine ganze Zahl im Bereich von 0 bis 12 darstellen und "k" und "a" jeweils unabhängig voneinander eine ganze Zahl im Bereich von 1 bis 12 darstellen; R⁴ eine normale, verzweigte oder zyklische, gesättigte/ungesättigte C₁₋₁₂-Alkylen-, -Cycloalkylen-, -Cycloalkylalkylen-, -Cycloalkenylalkylen-, -Alkenylen-, - Cycloalkenylen-, -Cycloalkylalkenylen-, -Cycloalkenylalkenylen-, -Arylen- oder - Aralkylengruppe darstellt.

3. Kautschukzusammensetzung nach Anspruch 1 oder 2, ferner umfassend ein Guanidin und ein Vulkanisationsmittel.

4. Verfahren zur Herstellung der Kautschukzusammensetzung nach Anspruch 3, wobei das Verfahren Folgendes umfasst:
einen ersten Misch- und Knetprozess zum Mischen und Kneten der Kautschukkomponente, des Füllstoffs, des Harzes und des Guanidins; und
einen zweiten Misch- und Knetprozess zum Mischen und Kneten einer Mischung, die durch den ersten Misch- und Knetprozess erhalten wurde, und des Vulkanisationsmittels.

5. Kautschukzusammensetzung nach Anspruch 3, wobei es sich bei dem Guanidin um 1,3-Diphenylguanidin, d. h. DPG, handelt.

6. Kautschukzusammensetzung nach einem der Ansprüche 1 bis 3 und 5, wobei das Harz ein hydriertes Harz mit einem Erweichungspunkt über 110 °C und einem gewichtsmittleren Molekulargewicht, bezogen auf Polystyrol, im Bereich von 200 g/mol bis 1.600 g/mol beinhaltet,
wobei der Erweichungspunkt des hydrierten Harzes gemäß JIS-K2207-1996 auf Basis der Ring- und Kugelmethode bestimmt wird.

7. Kautschukzusammensetzung nach Anspruch 6, wobei das hydrierte Harz mindestens eines ist, ausgewählt aus der Gruppe bestehend aus hydriertem C₃-Harz, hydriertem C₅₋C₉-Harz und hydriertem Dicyclopentadienharz.

8. Kautschukzusammensetzung nach einem der Ansprüche 1 bis 3 und 5 bis 7, wobei ein Gehalt des Harzes im Bereich von 2 bis 15 Masseteilen bezogen auf 100 Masseteilen der Kautschukkomponente liegt.

9. Reifen mit einer Kautschuklauffläche, die aus der Kautschukzusammensetzung nach einem der Ansprüche 1 bis 3 und 5 bis 8 gebildet ist.

10. Kautschukzusammensetzung nach Anspruch 1, wobei in der allgemeinen Formel (3) mindestens eines von R¹⁷(s) eine funktionelle Gruppe ist, die durch die allgemeine Formel (3a) oder die nachstehend gezeigte allgemeine Formel (3b) dargestellt wird, 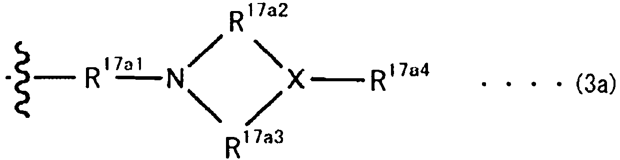
wobei in der allgemeinen Formel (3a) R^{17a1} Folgendes darstellt: eine C₁₋₂₀-Alkylengruppe, substituiert/unsubstituiert mit einer Substituentengruppe; eine C₅₋₂₀-Cycloalkylengruppe, substituiert/unsubstituiert mit einer Substituentengruppe; oder eine C₆₋₂₀-Arylengruppe, substituiert/unsubstituiert mit einer Substituentengruppe,
wobei die Substituentengruppe eine C₁₋₁₀-Alkylgruppe, eine C₅₋₁₀-Cycloalkylgruppe oder eine C₆₋₂₀-Arylgruppe ist,
jedes von R^{17a2} und R^{17a3} jeweils unabhängig voneinander eine C₁₋₁₀-Alkylgruppe, eine C₅₋₁₀-Cycloalkylgruppe oder eine C₁₋₂₀-Alkylengruppe, unsubstituiert/substituiert mit einer C₆₋₂₀-Arylgruppe, darstellt, und
R^{17a4} Folgendes darstellt: Wasserstoff; eine C₁₋₃₀-Alkylgruppe; eine C₂₋₃₀-Alkenylgruppe; eine C₂₋₃₀-Alkinylgruppe; eine C₁₋₃₀-Heteroalkylgruppe; eine C₂₋₃₀-Heteroalkenylgruppe; eine C₂₋₃₀-Heteroalkinylgruppe; eine C₅₋₃₀-Cycloalkylgruppe; eine C₆₋₃₀-Arylgruppe; oder eine heterocyclische C₃₋₃₀-Gruppe, "X" ein N-, O- oder S-Atom darstellt, wobei R^{17a4} nicht existiert, wenn X O oder S ist, 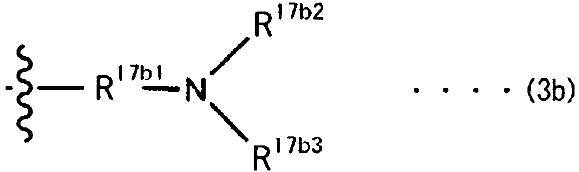
in der allgemeinen Formel (3b) R^{17b1} Folgendes darstellt: eine C₁₋₂₀-Alkylengruppe, substituiert/unsubstituiert mit einer Substituentengruppe; eine C₅₋₂₀-Cycloalkylengruppe, substituiert/unsubstituiert mit einer Substituentengruppe; oder eine C₆₋₂₀-Arylengruppe, substituiert/unsubstituiert mit einer Substituentengruppe,
die Substituentengruppe eine C₁₋₁₀-Alkylgruppe, eine C₅₋₁₀-Cycloalkylgruppe oder eine C₆₋₂₀-Arylgruppe ist und
jedes von R^{17b2} und R^{17b3} unabhängig voneinander darstellt: eine C₁₋₃₀-Alkylgruppe; eine C₂₋₃₀-Alkenylgruppe; eine C₂₋₃₀-Alkinylgruppe; eine C₁₋₃₀-Heteroalkylgruppe; eine C₂₋₃₀-Heteroalkenylgruppe; eine C₂₋₃₀-Heteroalkinylgruppe; eine C₅₋₃₀-Cycloalkylgruppe; eine C₆₋₃₀-Arylgruppe; oder eine heterocyclische C₃₋₃₀-Gruppe.

## Revendications

1. Composition en caoutchouc, comprenant un composant en caoutchouc, une charge et une résine,
dans laquelle :
le composant en caoutchouc contient du caoutchouc naturel, un caoutchouc styrène-butadiène modifié à Tg élevée et un caoutchouc styrène-butadiène modifié à faible Tg présentant une température de transition vitreuse (Tg) inférieure à celle du caoutchouc styrène-butadiène modifié à Tg élevée ;
une extrémité du caoutchouc styrène-butadiène modifié à Tg élevée a été modifiée par un agent de modification contenant le composé représenté par la formule générale (3) et l'autre extrémité du caoutchouc styrène-butadiène modifié à Tg élevée a été modifiée par un alcoxysilane ;
une extrémité du caoutchouc styrène-butadiène modifié à faible Tg a été modifiée par un alcoxysilane ; et
le rapport massique de la teneur en caoutchouc styrène-butadiène modifié à Tg élevée (SBR modifié à Tg élevée) par rapport à la teneur en caoutchouc styrène-butadiène modifié à faible Tg (SBR modifié à faible Tg), c.-à-d. la teneur en SBR modifié à Tg élevée/la teneur en SBR modifié à faible Tg, est supérieur à 1, 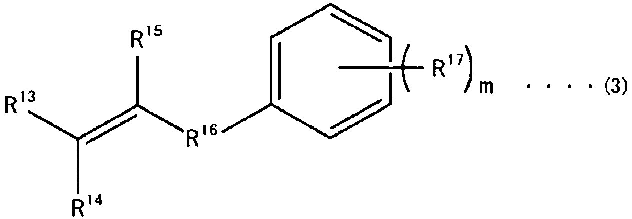
dans laquelle, dans la formule générale (3), chacun parmi R¹³ à R¹⁵ représente indépendamment : un hydrogène ; un groupe alkyle en C₁₋₃₀ ; un groupe alcényle en C₂₋₃₀; un groupe alcynyle en C₂₋₃₀; un groupe hétéroalkyle en C₁₋₃₀; un groupe hétéroalcényle en C₂₋₃₀; un groupe hétéroalcynyle en C₂₋₃₀; un groupe cycloalkyle en C₅₋₃₀; un groupe aryle en C₆₋₃₀ ; ou un groupe hétérocyclique en C₃₋₃₀;
R¹⁶ représente : une liaison simple ; un groupe alkylène en C₁₋₂₀ substitué/non substitué par un groupe substituant; un groupe cycloalkylène en C₅₋₂₀ substitué/non substitué par un groupe substituant; ou un groupe arylène en C₅₍₆₎₋₂₀ substitué/non substitué par un groupe substituant. À cet égard, le groupe substituant est un groupe alkyle en C₁₋₁₀, un groupe cycloalkyle en C₅₋₁₀ ou un groupe aryle en C₆₋₂₀; et
R¹⁷ représente : un groupe alkyle en C₁₋₃₀; un groupe alcényle en C₂₋₃₀ ; un groupe alcynyle en C₂₋₃₀ ; un groupe hétéroalkyle en C₁₋₃₀ ; un groupe hétéroalcényle en C₂₋₃₀ ; un groupe hétéroalcynyle en C₂₋₃₀ ; un groupe cycloalkyle en C₅₋₃₀ ; un groupe aryle en C₆₋₃₀ ; un groupe hétérocyclique en C₃₋₃₀ ; « m » représente un nombre entier situé dans la plage allant de 1 à 5, et une pluralité de R¹⁷ peuvent être du même type ou de types différents lorsque m est un nombre entier situé dans la plage allant de 2 à 5.

2. Composition en caoutchouc selon la revendication 1, comprenant en outre un agent de couplage silane représenté par la formule générale (1) indiquée ci-dessous, 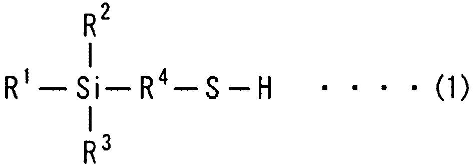 dans la formule générale (1), chacun parmi R¹, R² et R³ représente chacun indépendamment -O-CⱼH₂ⱼ₊₁, -(O-CₖH₂ₖ₋)ₐ-O-CₘH₂ₘ₊₁ ou -CₙH₂ₙ₊₁, dans laquelle : chacun parmi « j », « m » et « n » représente indépendamment un nombre entier situé dans la plage allant de 0 à 12 et chacun parmi « k » et « a » représente indépendamment un nombre entier situé dans la plage allant de 1 à 12 ; R⁴ représente un groupe alkylène, cycloalkylène, cycloalkylalkylène, cycloalcénylalkylène, alcénylène, cycloalcénylène, cycloalkylalcénylène, cycloalcénylalcénylène, arylène ou aralkylène en C₁₋₁₂ linéaire, ramifié ou cyclique saturé/insaturé.

3. Composition en caoutchouc selon la revendication 1 ou 2, comprenant en outre une guanidine et un agent de vulcanisation.

4. Procédé de fabrication de la composition en caoutchouc selon la revendication 3, dans lequel le procédé comprend :
un premier processus de mélange et de malaxage consistant à mélanger et à malaxer le composant en caoutchouc, la charge, la résine et la guanidine ; et
un second processus de mélange et de malaxage consistant à mélanger et à malaxer un mélange obtenu par le premier processus de mélange et de malaxage et l'agent de vulcanisation.

5. Composition en caoutchouc selon la revendication 3, dans laquelle la guanidine est la 1,3-diphénylguanidine, c.-à-d. la DPG.

6. Composition en caoutchouc selon l'une quelconque des revendications 1 à 3 et 5, dans laquelle la résine inclut une résine hydrogénée dont le point de ramollissement est supérieur à 110 °C et une masse moléculaire moyenne en poids exprimée en polystyrène situé dans la plage allant de 200 g/mol à 1600 g/mol,
dans laquelle le point de ramollissement de la résine hydrogénée est déterminé selon la norme JIS-K2207-1996 basée sur le procédé de l'anneau et de la bille.

7. Composition en caoutchouc selon la revendication 6, dans laquelle la résine hydrogénée est au moins une résine choisie parmi le groupe consistant en la résine en C₅ hydrogénée, la résine en C₅₋C₉ hydrogénée et la résine de dicyclopentadiène hydrogénée.

8. Composition en caoutchouc selon l'une quelconque des revendications 1 à 3 et 5 à 7, dans laquelle la teneur en résine est située dans la plage allant de 2 à 15 parties en masse par rapport à 100 parties en masse du composant en caoutchouc.

9. Pneu, présentant du caoutchouc de bande de roulement formé par la composition en caoutchouc selon l'une quelconque des revendications 1 à 3 et 5 à 8.

10. Composition en caoutchouc selon la revendication 1, dans laquelle, dans la formule générale (3), au moins l'un des R¹⁷ est un groupe fonctionnel représenté par la formule générale (3a) ou la formule générale (3b) indiquée ci-dessous, 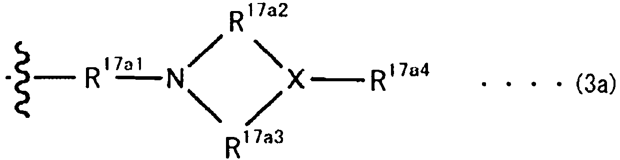
dans la formule générale (3a), R^{17a1} représente : un groupe alkylène en C₁₋₂₀ substitué/non substitué par un groupe substituant; un groupe cycloalkylène en C₅₋₂₀ substitué/non substitué par un groupe substituant; ou un groupe arylène en C₆₋₂₀ substitué/non substitué par un groupe substituant,
le groupe substituant est un groupe alkyle en C₁₋₁₀, un groupe cycloalkyle en C₅₋₁₀ ou un groupe aryle en C₆₋₂₀,
chacun parmi R^{17a2} et R^{17a3} représente indépendamment un groupe alkyle en C₁₋₁₀; un groupe cycloalkyle en C₅₋₁₀ ; ou un groupe alkylène en C₁₋₂₀ substitué/non substitué par un groupe aryle C₆₋₂₀, et
R^{17a4} représente : un hydrogène ; un groupe alkyle en C₁₋₃₀; un groupe alcényle en C₂₋₃₀ ; un groupe alcynyle en C₂₋₃₀ ; un groupe hétéroalkyle en C₁₋₃₀ ; un groupe hétéroalcényle en C₂₋₃₀ ; un groupe hétéroalcynyle en C₂₋₃₀ ; un groupe cycloalkyle en C₅₋₃₀ ; un groupe aryle en C₆₋₃₀ ; ou un groupe hétérocyclique en C₃₋₃₀. « X » représente un atome N, O ou S, dans lequel R^{17a4} n'existe pas lorsque X est O ou S, 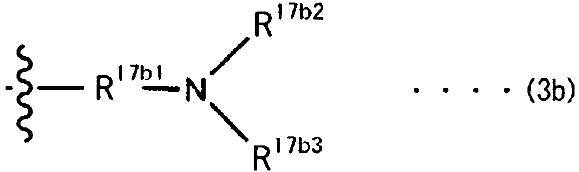
dans la formule générale (3b), R^{17b1} représente : un groupe alkylène en C₁₋₂₀ substitué/non substitué par un groupe substituant; un groupe cycloalkylène en C₅₋₂₀ substitué/non substitué par un groupe substituant; ou un groupe arylène en C₆₋₂₀ substitué/non substitué par un groupe substituant,
le groupe substituant est un groupe alkyle en C₁₋₁₀, un groupe cycloalkyle en C₅₋₁₀ ou un groupe aryle en C₆₋₂₀, et
chacun parmi R^{17b2} et R^{17b3} représente indépendamment : un groupe alkyle en C₁₋₃₀ ; un groupe alcényle en C₂₋₃₀ ; un groupe alcynyle en C₂₋₃₀ ; un groupe hétéroalkyle en C₁₋₃₀ ; un groupe hétéroalcényle en C₂₋₃₀ ; un groupe hétéroalcynyle en C₂₋₃₀ ; un groupe cycloalkyle en C₅₋₃₀ ; un groupe aryle en C₆₋₃₀ ; ou un groupe hétérocyclique en C₃₋₃₀.
